# EUROPEAN PATENT APPLICATION

(11) **EP 4 746 559 A1**
(43) Date of publication of application: **20.05.2026**
(21) Application number: 24848186.3
(22) Date of filing: 26.07.2024
(51) Int. Cl.: H04W 72/21

(54) **COMMUNICATION METHOD AND RELATED APPARATUS**

(30) Priority: 29.07.2023 CN 202310949354
(71) Applicant: Huawei Technologies Co., Ltd., Shenzhen, Guangdong 518129 (CN)
(72) Inventor: LU, Yujiao, Shenzhen, Guangdong 518129 (CN); FAN, Qiang, Shenzhen, Guangdong 518129 (CN)
(74) Representative: MERH-IP Matias Erny Reichl Hoffmann Patentanwälte PartG mbB
(86) International application number: PCT/CN2024/107901
(87) International publication number: WO 2025/026229

(57) **Abstract**

A communication method and a related apparatus are provided. The method includes: A terminal device determines an uplink signal; and the terminal device sends the uplink signal to an access network device. The uplink signal includes information about at least one logical resource, information about a first logical resource includes a first field and/or a second field, the first field indicates remaining time information of to-be-transmitted data in the first logical resource, the second field indicates a first BS table enabled for the first logical resource, there are a plurality of preset BS tables configured for the first logical resource, and the first BS table is included in the preset BS tables. When a remaining time reporting function is configured for the first logical resource, the information about the first logical resource includes the first field. When there are the plurality of preset BS tables, the information about the first logical resource includes the second field. In embodiments of this application, a design of the uplink signal is enhanced. This can avoid repetition or a conflict of reported information and also ensures network flexibility and configurability.

## Description

This application claims priority to Chinese Patent Application No. 202310949354.X, filed with the China National Intellectual Property Administration on July 29, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

In a new radio (new radio, NR) system, a terminal device may notify, by using a buffer status report (buffer status report, BSR), an access network device that the terminal device has to-be-transmitted uplink data. Therefore, the access network device may allocate a resource to the terminal device based on the BSR. Currently, when reporting the BSR, the terminal device may notify the access network device of an amount of the to-be-transmitted data (or a buffer status (buffer status, BS) interval within which the amount of the to-be-transmitted data falls) by reporting an index value in a BSR table corresponding to a long BSR or a short BSR. However, currently, a step of the BS interval in the BSR table corresponding to the long BSR or the short BSR is large. Consequently, an error of a reported data amount of the to-be-transmitted data is also large. In view of this, it has been proposed in current discussion of the 3rd generation partnership project (the 3rd generation partnership project, 3GPP) release 18 (Rel-18) that a new BSR table may be introduced. A step of a BS interval in the new BSR table is small, and therefore, the error of the reported data amount of the to-be-transmitted data can be reduced. In addition, to enable the access network device to perceive a delay consumption status of the data and a buffering status of the data on a side of the terminal device, the 3GPP Rel-18 further proposes that the terminal device may report, to the access network device, a remaining time (remaining time) of the data and the data amount of the to-be-transmitted data associated with the remaining time.

It can be learned from the foregoing descriptions that, the data amount of the to-be-transmitted data of the terminal device needs to be reported in both a scenario in which the new BSR table is used and a scenario in which the remaining time is reported. If different uplink signals are designed for the two scenarios to report information, air interface resource consumption is increased. Moreover, if the access network device receives two different reports sequentially, misunderstanding may occur, and consequently, scheduling cannot be accurately performed based on a buffer of the terminal device. In view of this, how to design an enhanced uplink signal becomes a problem urgently to be resolved.

### SUMMARY

This application provides a communication method and a related apparatus, to enhance a design of an uplink signal, so that both separate use and simultaneous use of two functions of remaining time reporting and a new BS table are supported. This avoids repetition or a conflict of reported information and also ensures network flexibility and configurability.

According to a first aspect, this application provides a communication method, performed by a terminal device. The terminal device may be a terminal device itself, or may be a module or a chip in the terminal device. In the method, the terminal device determines an uplink signal, and sends the uplink signal to a network device. The uplink signal includes information about at least one logical resource, the at least one logical resource includes a first logical resource, information about the first logical resource includes a first field and/or a second field, the first field indicates remaining time information of to-be-transmitted data in the first logical resource, the second field indicates a first BS table enabled for the first logical resource, there are a plurality of preset BS tables configured for the first logical resource, the first BS table is included in the preset BS tables, and the first BS table includes a plurality of BS intervals; when a remaining time reporting function is configured for the first logical resource, the information about the first logical resource includes the first field; and when there are the plurality of preset BS tables, the information about the first logical resource includes the second field.

In this embodiment of this application, the uplink signal may be a MAC CE, an RRC message, a PDCP control PDU, an RLC control PDU, or the like, and the logical resource may be a logical channel group, a logical channel, a DRB, or the like. This is not limited in embodiments of this application. A design of the uplink signal is enhanced, so that both separate use and simultaneous use of two functions of remaining time reporting and a new BS table are supported. Further, this can avoid repetition or a conflict of reported information and also ensure network flexibility and configurability.

In a possible design, when the remaining time reporting function is not configured for the first logical resource, the first field is a reserved field. When there is one preset BS table, the second field is a reserved field.

In this implementation, meanings of the first field and the second field are changed, so that a MAC CE in a unified format can be used for different scenarios and different configurations, thereby conveying different meanings. Both separate use and simultaneous use of two functions of a remaining time and a new BS table are supported. This avoids repetition or a conflict of reported information and also ensures network flexibility and configurability.

In a possible design, the information about the first logical resource further includes a third field and/or a fourth field, the third field indicates whether the first field exists, and the fourth field indicates whether the second field exists; and
when the third field indicates that the first field exists, the information about the first logical resource includes the first field; or
when the third field indicates that the first field does not exist, the information about the first logical resource does not include the first field; or
when the fourth field indicates that the second field exists, the information about the first logical resource includes the second field; or
when the fourth field indicates that the second field does not exist, the information about the first logical resource does not include the second field.

In this implementation, the third field and the fourth field are introduced, so that a MAC CE includes different content in different configurations, to support different network functions. Compared with the foregoing implementation in which the meanings of the first field and the second field are changed, in this implementation, a useless field that may exist in the MAC CE is further reduced, thereby reducing air interface resource consumption. The third field and the fourth field can be flexibly combined, so that both separate use and simultaneous use of two functions of a remaining time and a new BS table are supported. This avoids repetition or a conflict of reported information and also ensures network flexibility and configurability.

In a possible design,
when the remaining time reporting function is configured for the first logical resource, the third field indicates that the first field exists; or
when the remaining time reporting function is not configured for the first logical resource, the third field indicates that the first field does not exist; or
when there are the plurality of preset BS tables, the fourth field indicates that the second field exists; or
when there is one preset BS table, the fourth field indicates that the second field does not exist.

In a possible design, the information about the first logical resource further includes a third field, and the third field indicates whether the first field exists; and
when the third field indicates that the first field does not exist, the information about the first logical resource does not include the first field, and the information about the first logical resource includes the second field.

In this implementation, when the third field indicates that the first field does not exist, the separate fourth field is not required to indicate whether the second field exists, but the second field is directly included. In this way, a useless field can be further reduced, thereby helping reduce air interface resource consumption.

In a possible design, when the remaining time reporting function is configured for the first logical resource, and there is one preset BS table, the information about the first logical resource includes the first field and does not include the second field; or
when the remaining time reporting function is not configured for the first logical resource, and there are the plurality of preset BS tables, the information about the first logical resource includes the second field and does not include the first field; or
when the remaining time reporting function is configured for the first logical resource, and there are the plurality of preset BS tables, the information about the first logical resource includes the first field and the second field.

In this implementation, a plurality of different formats are directly designed for one MAC CE, so that the terminal device can select a corresponding format based on a network configuration. In this way, no additional indication information needs to be carried, thereby further reducing air interface resource consumption.

In a possible design, the information about the first logical resource further includes a fifth field, the fifth field indicates a first BS interval to which a data amount of to-be-transmitted data in the first logical resource belongs, and the first BS interval is included in the first BS table.

In this implementation, the information about the first logical resource may further include the fifth field indicating the data amount of the to-be-transmitted data in the first logical resource. After learning of the fifth field, the access network device may properly allocate a resource to the terminal device to transmit the to-be-transmitted data. Optionally, the fifth field may also be described as a BS value field or a BS value.

In a possible design, the first logical resource includes at least one piece of to-be-transmitted data, and one piece of to-be-transmitted data corresponds to one remaining time.

That the fifth field indicates the first BS interval to which the data amount of the to-be-transmitted data in the first logical resource belongs includes:

There is one fifth field, and the fifth field indicates a first BS interval to which a total data amount of all to-be-transmitted data in the first logical resource belongs; or
there is one fifth field, and the fifth field indicates a first BS interval to which a data amount of to-be-transmitted data within a smallest remaining time in a remaining time corresponding to the at least one piece of to-be-transmitted data belongs; or
there are two fifth fields, one fifth field indicates a first BS interval to which a total data amount belongs, and the other fifth field indicates a first BS interval to which a data amount of to-be-transmitted data within a smallest remaining time belongs; or
a quantity of fifth fields is equal to a quantity of remaining time intervals indicated by the first field, one fifth field corresponds to one remaining time interval in the remaining time interval indicated by the first field, and one fifth field indicates a first BS interval to which a data amount of to-be-transmitted data whose remaining time falls within the remaining time interval in the first logical resource belongs.

In this implementation, several possible forms of the fifth field are enumerated, which may be determined based on an actual situation, and have high applicability.

In a possible design, the first logical resource includes at least one piece of to-be-transmitted data, and one piece of to-be-transmitted data corresponds to one remaining time

That the first field indicates the remaining time information of the to-be-transmitted data in the first logical resource includes:

The first field indicates a smallest remaining time in a remaining time corresponding to the at least one piece of to-be-transmitted data; or
the first field indicates a remaining time interval to which a smallest remaining time in a remaining time corresponding to the at least one piece of to-be-transmitted data belongs; or
the first field indicates a remaining time interval to which a remaining time corresponding to the at least one piece of to-be-transmitted data respectively belongs.

In this implementation, several possible forms of the first field are enumerated, which may be determined based on an actual situation, and have high applicability.

In a possible design, that the second field indicates the first BS table enabled for the first logical resource includes:

The second field indicates one first BS table, the first BS table is one of the plurality of preset BS tables, and the first BS table is used as a reference for first BS intervals indicated by all fifth fields in the information about the first logical resource; or
when there are a plurality of fifth fields, the second field indicates a plurality of first BS tables, any one of the plurality of first BS tables is one of the plurality of preset BS tables, a quantity of the plurality of first BS tables is equal to the quantity of fifth fields, the plurality of first BS tables are in one-to-one correspondence with the plurality of fifth fields, and one corresponding first BS table is used as a reference for a first BS interval indicated by one fifth field.

In this implementation, several possible forms of the second field are enumerated, which may be determined based on an actual situation, and have high applicability.

In a possible design, an appearance order of the information about the at least one logical resource in the uplink signal is determined based on an identifier of the at least one logical resource; and/or
an appearance order of the information about the at least one logical resource in the uplink signal is determined based on a priority of the at least one logical resource; and/or
an appearance order of the information about the at least one logical resource in the uplink signal is determined based on a remaining time of to-be-transmitted data in the at least one logical resource.

In this implementation, when one MAC CE includes information about a plurality of LCGs, the information about the LCGs may be arranged in one of the following orders.

In a possible design, the uplink signal includes the identifier of the at least one logical resource, or the uplink signal includes a logical resource bitmap, where one bit in the logical resource bitmap corresponds to one logical resource.

In this implementation, the uplink signal may directly include the identifier of the at least one logical resource, or the uplink signal includes the logical resource bitmap. When a value of a corresponding bit is "1", it indicates that the uplink signal includes information about a corresponding logical resource. The implementations are diverse and have high applicability.

In a possible design, the uplink signal includes a MAC CE, an RRC message, a PDCP control PDU, or an RLC control PDU.

In a possible design, the logical resource includes a logical channel group, a logical channel, or a DRB.

According to a second aspect, this application provides a communication method, performed by an access network device. The access network device may be an access network device itself, or may be a module or a chip in the access network device. In the method, the access network device receives an uplink signal from a terminal device. The uplink signal includes information about at least one logical resource, the at least one logical resource includes a first logical resource, information about the first logical resource includes a first field and/or a second field, the first field indicates remaining time information of to-be-transmitted data in the first logical resource, the second field indicates a first BS table enabled for the first logical resource, there are a plurality of preset BS tables configured for the first logical resource, the first BS table is included in the preset BS tables, and the first BS table includes a plurality of BS intervals; when a remaining time reporting function is configured for the first logical resource, the information about the first logical resource includes the first field; and when there are the plurality of preset BS tables, the information about the first logical resource includes the second field.

In a possible design, when the remaining time reporting function is not configured for the first logical resource, the first field is a reserved field.

When there is one preset BS table, the second field is a reserved field.

In a possible design, the information about the first logical resource further includes a third field and/or a fourth field, the third field indicates whether the first field exists, and the fourth field indicates whether the second field exists; and
when the third field indicates that the first field exists, the information about the first logical resource includes the first field; or
when the third field indicates that the first field does not exist, the information about the first logical resource does not include the first field; or
when the fourth field indicates that the second field exists, the information about the first logical resource includes the second field; or
when the fourth field indicates that the second field does not exist, the information about the first logical resource does not include the second field.

In a possible design, when the remaining time reporting function is configured for the first logical resource, the third field indicates that the first field exists; or
when the remaining time reporting function is not configured for the first logical resource, the third field indicates that the first field does not exist; or
when there are the plurality of preset BS tables, the fourth field indicates that the second field exists; or
when there is one preset BS table, the fourth field indicates that the second field does not exist.

In a possible design, the information about the first logical resource further includes a third field, and the third field indicates whether the first field exists; and
when the third field indicates that the first field does not exist, the information about the first logical resource does not include the first field, and the information about the first logical resource includes the second field.

In a possible design, when the remaining time reporting function is configured for the first logical resource, and there is one preset BS table, the information about the first logical resource includes the first field and does not include the second field; or
when the remaining time reporting function is not configured for the first logical resource, and there are the plurality of preset BS tables, the information about the first logical resource includes the second field and does not include the first field; or
when the remaining time reporting function is configured for the first logical resource, and there are the plurality of preset BS tables, the information about the first logical resource includes the first field and the second field.

In a possible design, the information about the first logical resource further includes a fifth field, the fifth field indicates a first BS interval to which a data amount of to-be-transmitted data in the first logical resource belongs, and the first BS interval is included in the first BS table.

In a possible design, the first logical resource includes at least one piece of to-be-transmitted data, and one piece of to-be-transmitted data corresponds to one remaining time.

That the fifth field indicates the first BS interval to which the data amount of the to-be-transmitted data in the first logical resource belongs includes:

There is one fifth field, and the fifth field indicates a first BS interval to which a total data amount of all to-be-transmitted data in the first logical resource belongs; or
there is one fifth field, and the fifth field indicates a first BS interval to which a data amount of to-be-transmitted data within a smallest remaining time in a remaining time corresponding to the at least one piece of to-be-transmitted data belongs; or
there are two fifth fields, one fifth field indicates a first BS interval to which a total data amount belongs, and the other fifth field indicates a first BS interval to which a data amount of to-be-transmitted data within a smallest remaining time belongs; or
a quantity of fifth fields is equal to a quantity of remaining time intervals indicated by the first field, one fifth field corresponds to one remaining time interval in the remaining time interval indicated by the first field, and one fifth field indicates a first BS interval to which a data amount of to-be-transmitted data whose remaining time falls within the remaining time interval in the first logical resource belongs.

In a possible design, the first logical resource includes at least one piece of to-be-transmitted data, and one piece of to-be-transmitted data corresponds to one remaining time.

That the first field indicates the remaining time information of the to-be-transmitted data in the first logical resource includes:
The first field indicates a smallest remaining time in a remaining time corresponding to the at least one piece of to-be-transmitted data; or
the first field indicates a remaining time interval to which a smallest remaining time in a remaining time corresponding to the at least one piece of to-be-transmitted data belongs; or
the first field indicates a remaining time interval to which a remaining time corresponding to the at least one piece of to-be-transmitted data respectively belongs.

In a possible design, that the second field indicates the first BS table enabled for the first logical resource includes:
The second field indicates one first BS table, the first BS table is one of the plurality of preset BS tables, and the first BS table is used as a reference for first BS intervals indicated by all fifth fields in the information about the first logical resource; or
when there are a plurality of fifth fields, the second field indicates a plurality of first BS tables, any one of the plurality of first BS tables is one of a plurality of preset BS tables, a quantity of the plurality of first BS tables is equal to the quantity of fifth fields, the plurality of first BS tables are in one-to-one correspondence with the plurality of fifth fields, and one corresponding first BS table is used as a reference for a first BS interval indicated by one fifth field.

In a possible design, an appearance order of the information about the at least one logical resource in the uplink signal is determined based on an identifier of the at least one logical resource; and/or
an appearance order of the information about the at least one logical resource in the uplink signal is determined based on a priority of the at least one logical resource; and/or
an appearance order of the information about the at least one logical resource in the uplink signal is determined based on a remaining time of to-be-transmitted data in the at least one logical resource.

In a possible design, the uplink signal includes the identifier of the at least one logical resource, or the uplink signal includes a logical resource bitmap, where one bit in the logical resource bitmap corresponds to one logical resource.

In a possible design, the uplink signal includes a MAC CE, an RRC message, a PDCP control PDU, or an RLC control PDU.

In a possible design, the logical resource includes a logical channel group, a logical channel, or a DRB.

According to a third aspect, this application provides a communication apparatus. The communication apparatus may be a communication apparatus itself, or a module, a chip, or a unit in the communication apparatus. The communication apparatus includes:
a processing unit, configured to determine an uplink signal; and
a transceiver unit, configured to send the uplink signal to an access network device.

The uplink signal includes information about at least one logical resource, the at least one logical resource includes a first logical resource, information about the first logical resource includes a first field and/or a second field, the first field indicates remaining time information of to-be-transmitted data in the first logical resource, the second field indicates a first BS table enabled for the first logical resource, there are a plurality of preset BS tables configured for the first logical resource, the first BS table is included in the preset BS tables, and the first BS table includes a plurality of BS intervals; when a remaining time reporting function is configured for the first logical resource, the information about the first logical resource includes the first field; and when there are the plurality of preset BS tables, the information about the first logical resource includes the second field.

In a possible design, when the remaining time reporting function is not configured for the first logical resource, the first field is a reserved field.

When there is one preset BS table, the second field is a reserved field.

In a possible design, the information about the first logical resource further includes a third field and/or a fourth field, the third field indicates whether the first field exists, and the fourth field indicates whether the second field exists; and
when the third field indicates that the first field exists, the information about the first logical resource includes the first field; or
when the third field indicates that the first field does not exist, the information about the first logical resource does not include the first field; or
when the fourth field indicates that the second field exists, the information about the first logical resource includes the second field; or
when the fourth field indicates that the second field does not exist, the information about the first logical resource does not include the second field.

In a possible design, when the remaining time reporting function is configured for the first logical resource, the third field indicates that the first field exists; or
when the remaining time reporting function is not configured for the first logical resource, the third field indicates that the first field does not exist; or
when there are the plurality of preset BS tables, the fourth field indicates that the second field exists; or
when there is one preset BS table, the fourth field indicates that the second field does not exist.

In a possible design, the information about the first logical resource further includes a third field, and the third field indicates whether the first field exists; and
when the third field indicates that the first field does not exist, the information about the first logical resource does not include the first field, and the information about the first logical resource includes the second field.

In a possible design, when the remaining time reporting function is configured for the first logical resource, and there is one preset BS table, the information about the first logical resource includes the first field and does not include the second field; or
when the remaining time reporting function is not configured for the first logical resource, and there are the plurality of preset BS tables, the information about the first logical resource includes the second field and does not include the first field; or
when the remaining time reporting function is configured for the first logical resource, and there are the plurality of preset BS tables, the information about the first logical resource includes the first field and the second field.

In a possible design, the information about the first logical resource further includes a fifth field, the fifth field indicates a first BS interval to which a data amount of to-be-transmitted data in the first logical resource belongs, and the first BS interval is included in the first BS table.

In a possible design, the first logical resource includes at least one piece of to-be-transmitted data, and one piece of to-be-transmitted data corresponds to one remaining time.

That the fifth field indicates the first BS interval to which the data amount of the to-be-transmitted data in the first logical resource belongs includes:

There is one fifth field, and the fifth field indicates a first BS interval to which a total data amount of all to-be-transmitted data in the first logical resource belongs; or
there is one fifth field, and the fifth field indicates a first BS interval to which a data amount of to-be-transmitted data within a smallest remaining time in a remaining time corresponding to the at least one piece of to-be-transmitted data belongs; or
there are two fifth fields, one fifth field indicates a first BS interval to which a total data amount belongs, and the other fifth field indicates a first BS interval to which a data amount of to-be-transmitted data within a smallest remaining time belongs; or
a quantity of fifth fields is equal to a quantity of remaining time intervals indicated by the first field, one fifth field corresponds to one remaining time interval in the remaining time interval indicated by the first field, and one fifth field indicates a first BS interval to which a data amount of to-be-transmitted data whose remaining time falls within the remaining time interval in the first logical resource belongs.

In a possible design, the first logical resource includes at least one piece of to-be-transmitted data, and one piece of to-be-transmitted data corresponds to one remaining time.

That the first field indicates the remaining time information of the to-be-transmitted data in the first logical resource includes:

The first field indicates a smallest remaining time in a remaining time corresponding to the at least one piece of to-be-transmitted data; or
the first field indicates a remaining time interval to which a smallest remaining time in a remaining time corresponding to the at least one piece of to-be-transmitted data belongs; or
the first field indicates a remaining time interval to which a remaining time corresponding to the at least one piece of to-be-transmitted data respectively belongs.

In a possible design, that the second field indicates the first BS table enabled for the first logical resource includes:
The second field indicates one first BS table, the first BS table is one of the plurality of preset BS tables, and the first BS table is used as a reference for first BS intervals indicated by all fifth fields in the information about the first logical resource; or
when there are a plurality of fifth fields, the second field indicates a plurality of first BS tables, any one of the plurality of first BS tables is one of a plurality of preset BS tables, a quantity of the plurality of first BS tables is equal to the quantity of fifth fields, the plurality of first BS tables are in one-to-one correspondence with the plurality of fifth fields, and one corresponding first BS table is used as a reference for a first BS interval indicated by one fifth field.

In a possible design, an appearance order of the information about the at least one logical resource in the uplink signal is determined based on an identifier of the at least one logical resource; and/or
an appearance order of the information about the at least one logical resource in the uplink signal is determined based on a priority of the at least one logical resource; and/or
an appearance order of the information about the at least one logical resource in the uplink signal is determined based on a remaining time of to-be-transmitted data in the at least one logical resource.

In a possible design, the uplink signal includes the identifier of the at least one logical resource, or the uplink signal includes a logical resource bitmap, where one bit in the logical resource bitmap corresponds to one logical resource.

In a possible design, the uplink signal includes a MAC CE, an RRC message, a PDCP control PDU, or an RLC control PDU.

In a possible design, the logical resource includes a logical channel group, a logical channel, or a DRB.

According to a fourth aspect, this application provides a communication apparatus. The communication apparatus may be a communication apparatus itself, or a module, a chip, or a unit in the communication apparatus. The communication apparatus includes:
a transceiver unit, configured to receive an uplink signal from a terminal device.

The uplink signal includes information about at least one logical resource, the at least one logical resource includes a first logical resource, information about the first logical resource includes a first field and/or a second field, the first field indicates remaining time information of to-be-transmitted data in the first logical resource, the second field indicates a first BS table enabled for the first logical resource, there are a plurality of preset BS tables configured for the first logical resource, the first BS table is included in the preset BS tables, and the first BS table includes a plurality of BS intervals; when a remaining time reporting function is configured for the first logical resource, the information about the first logical resource includes the first field; and when there are the plurality of preset BS tables, the information about the first logical resource includes the second field.

In a possible design, when the remaining time reporting function is not configured for the first logical resource, the first field is a reserved field.

When there is one preset BS table, the second field is a reserved field.

In a possible design, the information about the first logical resource further includes a third field and/or a fourth field, the third field indicates whether the first field exists, and the fourth field indicates whether the second field exists; and
when the third field indicates that the first field exists, the information about the first logical resource includes the first field; or
when the third field indicates that the first field does not exist, the information about the first logical resource does not include the first field; or
when the fourth field indicates that the second field exists, the information about the first logical resource includes the second field; or
when the fourth field indicates that the second field does not exist, the information about the first logical resource does not include the second field.

In a possible design, when the remaining time reporting function is configured for the first logical resource, the third field indicates that the first field exists; or
when the remaining time reporting function is not configured for the first logical resource, the third field indicates that the first field does not exist; or
when there are the plurality of preset BS tables, the fourth field indicates that the second field exists; or
when there is one preset BS table, the fourth field indicates that the second field does not exist.

In a possible design, the information about the first logical resource further includes a third field, and the third field indicates whether the first field exists; and
when the third field indicates that the first field does not exist, the information about the first logical resource does not include the first field, and the information about the first logical resource includes the second field.

In a possible design, when the remaining time reporting function is configured for the first logical resource, and there is one preset BS table, the information about the first logical resource includes the first field and does not include the second field; or
when the remaining time reporting function is not configured for the first logical resource, and there are the plurality of preset BS tables, the information about the first logical resource includes the second field and does not include the first field; or
when the remaining time reporting function is configured for the first logical resource, and there are the plurality of preset BS tables, the information about the first logical resource includes the first field and the second field.

In a possible design, the information about the first logical resource further includes a fifth field, the fifth field indicates a first BS interval to which a data amount of to-be-transmitted data in the first logical resource belongs, and the first BS interval is included in the first BS table.

In a possible design, the first logical resource includes at least one piece of to-be-transmitted data, and one piece of to-be-transmitted data corresponds to one remaining time.

That the fifth field indicates the first BS interval to which the data amount of the to-be-transmitted data in the first logical resource belongs includes:

There is one fifth field, and the fifth field indicates a first BS interval to which a total data amount of all to-be-transmitted data in the first logical resource belongs; or
there is one fifth field, and the fifth field indicates a first BS interval to which a data amount of to-be-transmitted data within a smallest remaining time in a remaining time corresponding to the at least one piece of to-be-transmitted data belongs; or
there are two fifth fields, one fifth field indicates a first BS interval to which a total data amount belongs, and the other fifth field indicates a first BS interval to which a data amount of to-be-transmitted data within a smallest remaining time belongs; or
a quantity of fifth fields is equal to a quantity of remaining time intervals indicated by the first field, one fifth field corresponds to one remaining time interval in the remaining time interval indicated by the first field, and one fifth field indicates a first BS interval to which a data amount of to-be-transmitted data whose remaining time falls within the remaining time interval in the first logical resource belongs.

In a possible design, the first logical resource includes at least one piece of to-be-transmitted data, and one piece of to-be-transmitted data corresponds to one remaining time.

That the first field indicates the remaining time information of the to-be-transmitted data in the first logical resource includes:

The first field indicates a smallest remaining time in a remaining time corresponding to the at least one piece of to-be-transmitted data; or
the first field indicates a remaining time interval to which a smallest remaining time in a remaining time corresponding to the at least one piece of to-be-transmitted data belongs; or
the first field indicates a remaining time interval to which a remaining time corresponding to the at least one piece of to-be-transmitted data respectively belongs.

In a possible design, that the second field indicates the first BS table enabled for the first logical resource includes:

The second field indicates one first BS table, the first BS table is one of the plurality of preset BS tables, and the first BS table is used as a reference for first BS intervals indicated by all fifth fields in the information about the first logical resource; or
when there are a plurality of fifth fields, the second field indicates a plurality of first BS tables, any one of the plurality of first BS tables is one of a plurality of preset BS tables, a quantity of the plurality of first BS tables is equal to the quantity of fifth fields, the plurality of first BS tables are in one-to-one correspondence with the plurality of fifth fields, and one corresponding first BS table is used as a reference for a first BS interval indicated by one fifth field.

In a possible design, an appearance order of the information about the at least one logical resource in the uplink signal is determined based on an identifier of the at least one logical resource; and/or
an appearance order of the information about the at least one logical resource in the uplink signal is determined based on a priority of the at least one logical resource; and/or
an appearance order of the information about the at least one logical resource in the uplink signal is determined based on a remaining time of to-be-transmitted data in the at least one logical resource.

In a possible design, the uplink signal includes the identifier of the at least one logical resource, or the uplink signal includes a logical resource bitmap, where one bit in the logical resource bitmap corresponds to one logical resource.

In a possible design, the uplink signal includes a MAC CE, an RRC message, a PDCP control PDU, or an RLC control PDU.

In a possible design, the logical resource includes a logical channel group, a logical channel, or a DRB.

According to a fifth aspect, this application provides a communication apparatus. The communication apparatus includes a processor, where the processor is configured to execute a computer program, to enable the communication apparatus to perform the method according to any one of the first aspect or the second aspect.

In a possible design, the communication apparatus may be a chip or a device including a chip that performs the method according to any one of the first aspect or the second aspect.

In a possible design, the communication apparatus further includes a transceiver. The processor is coupled to the transceiver.

In a possible design, the communication apparatus further includes a memory. The processor is coupled to the memory, the memory stores a computer program, and the processor is further configured to invoke the computer program in the memory. Optionally, the processor and the memory may alternatively be integrated together.

According to a sixth aspect, this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus; and the processor is configured to implement the method according to any one of the first aspect or the second aspect through a logic circuit or by executing code instructions.

According to a seventh aspect, this application provides a computer-readable storage medium. The storage medium stores a computer program or instructions. When the computer program or the instructions are executed by a computer, the method according to any one of the first aspect or the second aspect is implemented.

According to an eighth aspect, this application provides a computer program product. When a computer reads and executes the computer program product, the computer is enabled to perform the method according to any one of the first aspect or the second aspect.

According to a ninth aspect, this application provides a communication system. The communication system includes a communication apparatus configured to implement the method according to any one of the first aspect, and includes a communication apparatus configured to implement the method according to any one of the second aspect.

For beneficial effects of the second aspect to the ninth aspect, refer to the beneficial effects of the first aspect. Details are not described herein again.

### BRIEF DESCRIPTION OF DRAWINGS

FIG. 1 is a diagram of an architecture of a communication system to which an embodiment of this application is applied;
FIG. 2 is a diagram of a format of a short BSR MAC CE or a short truncated BSR MAC CE;
FIG. 3 is a diagram of a format of a long BSR MAC CE or a long truncated BSR MAC CE;
FIG. 4 is a schematic flowchart of a communication method according to an embodiment of this application;
FIG. 5 is a diagram of a format of a MAC CE according to an embodiment of this application;
FIG. 6 is a diagram of another format of a MAC CE according to an embodiment of this application;
FIG. 7 is a diagram of another format of a MAC CE according to an embodiment of this application;
FIG. 8 is a diagram of another format of a MAC CE according to an embodiment of this application;
FIG. 9 is a diagram of another format of a MAC CE according to an embodiment of this application;
FIG. 10 is a diagram of another format of a MAC CE according to an embodiment of this application;
FIG. 11 is a diagram of another format of a MAC CE according to an embodiment of this application;
FIG. 12 is a diagram of another format of a MAC CE according to an embodiment of this application;
FIG. 13 is a diagram of another format of a MAC CE according to an embodiment of this application;
FIG. 14 is a diagram of a structure of a possible communication apparatus according to an embodiment of this application; and
FIG. 15 is a diagram of a structure of a possible communication apparatus according to an embodiment of this application.

### DESCRIPTION OF EMBODIMENTS

The following further describes specific embodiments of this application in detail with reference to accompanying drawings.

In the specification, claims, and accompanying drawings of this application, terms "first", "second", and the like are intended to distinguish between different objects but do not indicate a particular order. In addition, terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiment" mentioned herein mean that specific features, structures, or characteristics described in combination with the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that the embodiment described in the specification may be combined with another embodiment.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one item (piece) of a, b, or c may indicate: a, b, c, "a and b", "a and c", "b and c", or "a, b, and c", where a, b, and c may be singular or plural.

To better understand embodiments of this application, the following first describes a system architecture in embodiments of this application.

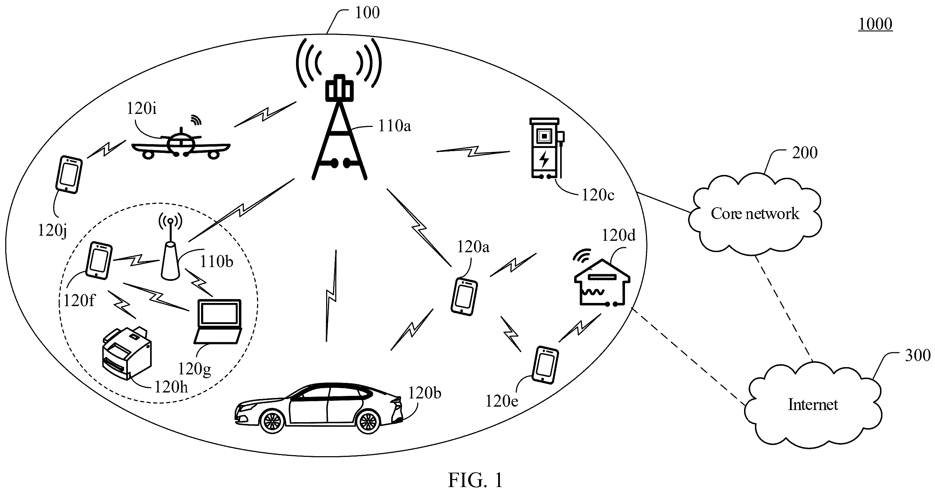

FIG. 1 is a diagram of an architecture of a communication system to which an embodiment of this application is applied. As shown in FIG. 1, the communication system 1000 includes a radio access network (radio access network, RAN) 100 and a core network (core network, CN) 200. Optionally, the communication system 1000 may further include an internet 300. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices respectively, or may be a same physical device that integrates a core network logical function and a radio access network logical function.

The RAN 100 may be a cellular system related to the 3rd generation partnership project (3rd generation partnership project, 3GPP), for example, a 4G or 5G mobile communication system, or a future-oriented evolved system (for example, a 6G mobile communication system). The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be referred to as an access network device, a RAN entity, an access node, or the like sometimes, and forms a part of the communication system, to help the terminal implement radio access. The plurality of RAN nodes 110 in the communication system 1000 may be nodes of a same type, or may be nodes of different types. In some scenarios, roles of the RAN node 110 and the terminal 120 are relative to each other. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Sometimes, the RAN node 110 and the terminal 120 are both referred to as communication apparatuses. For example, the base stations 110a and 110b in FIG. 1 may be understood as communication apparatuses having a base station function, and the terminals 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). All or some functions of the RAN node in this application may alternatively be implemented by using a software function running on hardware, or may be implemented by using an instantiated virtualization function on a platform (for example, a cloud platform). Alternatively, the RAN node in this application may be a logical node, a logical module, or software that can implement all or some functions of the RAN node.

In another possible scenario, a plurality of RAN nodes coordinate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU herein completes functions of a radio resource control protocol and a packet data convergence protocol (packet data convergence protocol, PDCP) of a base station, and may further complete a function of a service data adaptation protocol (service data adaptation protocol, SDAP). The DU herein completes functions of a radio link control layer and a medium access control (medium access control, MAC) layer of a base station, and may further complete some or all of functions of a physical layer. For specific descriptions of the foregoing protocol layers, refer to technical specifications related to the 3rd generation partnership project (3rd generation partnership project, 3GPP). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may also be referred to as a terminal device, user equipment (user equipment, UE), a mobile station, a mobile terminal, mobile equipment (mobile equipment, ME), or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IoT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

The core network may include one or more function entities (or referred to as core network elements, network elements, entities, or the like), such as a network slice selection function (network slice selection function, NSSF), a network exposure function (network exposure function, NEF), a network repository function (network repository function, NRF), a policy control function (policy control function, PCF), a unified data management (unified data management, UDM), an access and mobility management function (access and mobility management function, AMF), an authentication server function (authentication server function, AUSF), a session management function (session management function, SMF), and the like.

It should be noted that the foregoing functional entities are only names, and the names do not constitute a limitation on the entities. For example, the session management function may alternatively be replaced with a "session management function entity" or another name. In addition, the session management function entity may alternatively correspond to an entity that includes another function in addition to the session management function. A user plane function may alternatively be replaced with a "user plane function entity" or another name. In addition, the user plane function entity may alternatively correspond to an entity that includes another function in addition to the user plane function. Unified descriptions are provided herein. Details are not described again below.

It should be noted that names of messages between network elements, names of parameters in the messages, or the like in the following embodiments of this application are merely examples, and there may be other names during specific implementation. This is not specifically limited in embodiments of this application.

In this application, "sending information to... (a terminal)" may be understood as that a destination end of the information is the terminal, and may include directly or indirectly sending the information to the terminal. "Receiving information from... (a terminal)" may be understood as that a source end of the information is the terminal, and may include directly or indirectly receiving the information from the terminal. Information may undergo necessary processing, for example, a format change, between the source end for sending the information and the destination end. However, the destination end may understand valid information from the source end. A similar expression in this application may be understood similarly, and details are not described herein again.

It should be understood that the terminal device in embodiments of this application may be any one of the foregoing devices or a chip. This is not specifically limited herein. Either being a device or a chip, the terminal device can be manufactured, sold, or used as an independent product. In this embodiment and subsequent embodiments, only the terminal device is used as an example for description.

It should be understood that in embodiments of this application, an apparatus configured to implement the function of the access network device may be an access network device, or may be an apparatus that can support the access network device in implementing the function, for example, a chip system, or a combined device or component that can implement the function of the access network device. The apparatus may be installed in the access network device. In this embodiment of this application, the chip system may include a chip, or may include a chip and another discrete component. In this embodiment and subsequent embodiments, only the access network device is used as an example for description.

The following explains and describes related technical features in embodiments of this application. It should be noted that these explanations are intended to make embodiments of this application easier to understand, but should not be construed as a limitation on the protection scope claimed in this application.

### 1. Extended reality (extended reality, XR)

The XR refers to all real-and-virtual combined environments and human-machine interactions generated by using a computer technology and wearable devices, and specifically includes the following representative forms: augmented reality (augmented reality, AR), mixed reality (mixed reality, MR), and virtual reality (virtual reality, VR).

The XR is one of 5G multimedia applications that are mainly considered in the industry field currently. The 3rd generation partnership project (the 3rd generation partnership project, 3GPP) release 17 (Rel-17) conducted modeling and analysis on service characteristics of the XR. Usually, an XR service periodically generates data frames based on a specific frame rate. An AR service with a frame rate of 60 fps is used as an example. 60 frames of video images are generated per second, one video frame appears approximately every 16.66 ms, and one video frame may be transmitted by using a plurality of data packets.

A size of the data frame is not fixed, and usually complies with truncated Gaussian distribution. A mean may be expressed as mean = R × 1e6/F/8, where F is a frame rate, and R is a rate of a data stream. For example, F = 60 fps, and R = 20 Mbps. In this case, mean = 41.67 Kbytes. Generally, the size of the data frame is between 0.5 * mean and 1.5 * mean.

Because there is a delay during encoding of a data frame, jitter (jitter) may occur in a moment at which XR data in each periodicity arrives at an air interface side, that is, a data arrival moment may be earlier or later than an expected periodicity moment, and generally fluctuates within several milliseconds.

The XR service usually has a high delay requirement. An uplink AR service is used as an example. A typical packet delay budget (packet delay budget, PDB) of the uplink AR service is 30 ms. To be specific, an upper limit of a transmission delay between arrival of a data packet at an access stratum of a terminal device and arrival of the data packet at an N6 interface of a user plane function (user plane function, UPF) network element is 30 ms. If the data packet is not successfully transmitted within a time period required by the PDB, it is considered that the data packet has timed out and is invalid.

In addition to the PDB, a PDU set delay budget (PDU set delay budget, PSDB) may be further considered in the XR service. A meaning of the PSDB is similar to that of the PDB, and an upper limit of a transmission delay of a group of data packets (for example, a PDU set) is defined. For uplink, the upper limit of the transmission delay is an upper limit of a time period from arrival of a 1^{st} data packet in the PDU set at the access stratum of the terminal device to arrival of a last data packet at the N6 interface of the UPF. For downlink, the case is reverse.

A network should complete data scheduling and transmission within a delay budget as much as possible, to avoid affecting service experience due to data timeout.

### 2. Buffer status report (buffer status report, BSR)

If a terminal device has no to-be-sent uplink data, an access network device does not need to allocate a resource to the terminal device. Otherwise, a resource waste is caused. In NR, the terminal device may notify, by using a BSR/scheduling request (scheduling request, SR), the access network device that there is to-be-transmitted uplink data.

Each logical channel (logical channel, LCH) of the terminal device may be allocated to one logical channel group (logical channel group, LCG). A maximum of eight LCGs can be configured in NR. In NR, the terminal device may trigger the BSR when the following events occur.
(1) An LCH belonging to one LCG has uplink data arriving, and no LCH included in another LCG has to-be-transmitted data, or a priority of the LCH is higher than a priority of an LCH that is included in another LCG and that has to-be-transmitted data. The BSR triggered in this case is referred to as a "regular BSR (Regular BSR)".
(2) There is an available uplink resource and remaining padding bits (bits) are greater than or equal to a size of a BSR medium access control control element (medium access control control element, MAC CE) plus a MAC CE subheader. The BSR triggered in this case is referred to as a "padding BSR" (Padding BSR).
(3) A retransmission BSR timer (retxBSR-Timer) expires, and at least one LCH included in an LCG has to-be-transmitted uplink data. The BSR triggered in this case is referred to as a "Regular BSR".
(4) A periodic BSR timer (periodicBSR-Timer) expires. The BSR triggered in this case is referred to as a "Periodic BSR".

When the terminal device has triggered at least one BSR and the at least one BSR has not been canceled, the following cases exist.
(1) If there is an available uplink resource for new transmission, and the uplink resource can accommodate a BSR MAC CE and a MAC CE subheader, the terminal device may generate one BSR MAC CE. If none of generated BSRs is a long truncated BSR or a short truncated BSR, the terminal device starts/restarts periodicBSR-Timer. The terminal device starts/restarts retxBSR-Timer.
(2) If the regular BSR is triggered and logicalChannelSR-DelayTimer does not run, when there are no available uplink resource for new transmission, or the terminal device is configured with configured uplink grants (configured uplink grants) and the regular BSR is triggered by an LCH for which a logicalChannelSR-Mask parameter is set to false, or an uplink resource that can be used for new transmission cannot satisfy an LCP mapping restriction corresponding to the LCH that triggers the BSR, the terminal device triggers the SR.

### 3. BSR MAC CE

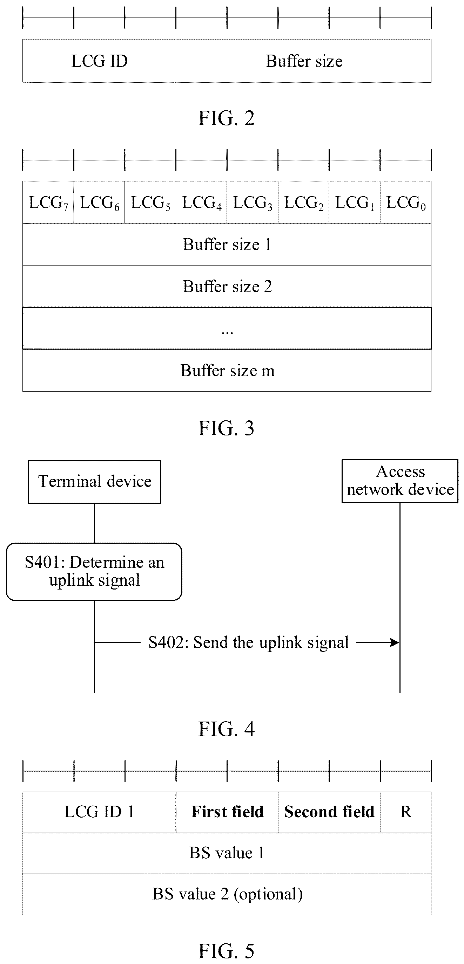

When a terminal device generates a BSR MAC CE, specific formats of the BSR MAC CE are shown in FIG. 2 and FIG. 3 below. A short BSR MAC CE or a short truncated BSR MAC CE shown in FIG. 2 includes a 3-bit LCG ID field and a 5-bit buffer size (Buffer Size) field, where the LCG ID indicates an LCG corresponding to a subsequently reported buffer size. A long BSR MAC CE or a long truncated BSR MAC CE shown in FIG. 3 includes an 8-bit bitmap (bitmap) and zero or more Buffer Size fields. For the long BSR MAC CE, an i^{th} bit LCG i in the bitmap indicates whether an LCG i has a corresponding Buffer Size field. For the long truncated BSR MAC CE, an i^{th} bit LCG i in the bitmap indicates whether an LCG i has to-be-transmitted data, and in this case, a Buffer Size field corresponding to the LCG i may not necessarily exist subsequently.

A specific format of the BSR MAC CE selected by the terminal device for reporting depends on a triggered BSR type, a quantity of LCGs having to-be-transmitted data, a size of an available remaining resource, and the like.

### (1) For a regular BSR and a periodic BSR:

When more than one LCG has to-be-transmitted data, a long BSR is reported; or
when only one LCG has to-be-transmitted data, a short BSR is reported.

(2) For a padding BSR:
① When a padding resource is equal to a size of a short BSR plus a subheader of the short BSR, and when more than one LCG has to-be-transmitted data, a short truncated BSR is reported; or when only one LCG has to-be-transmitted data, the short BSR is reported.
② When a padding resource is greater than a size of a short BSR plus a subheader of the short BSR and less than a size of a long BSR plus a subheader of the long BSR, and
   when more than one LCG has to-be-transmitted data, a long truncated BSR is reported; or
   when only one LCG has to-be-transmitted data, the short BSR is reported.
③ When a padding resource is greater than or equal to a size of a long BSR plus a subheader of the long BSR, the long BSR is reported.

The terminal device may notify an access network device of an amount of to-be-transmitted data (an interval within which the amount of the to-be-transmitted data falls) by reporting an index value in a BSR table corresponding to the long BSR or the short BSR. A BSR table corresponding to the short BSR and the short truncated BSR is shown in Table 1, and a BSR table corresponding to the long BSR and the long truncated BSR is shown in Table 2. Index represents an index value, a buffer status (buffer status, BS) value (BS value) represents the amount of the to-be-transmitted data (the interval within which the amount of the to-be-transmitted data falls), and a unit is byte (Byte).

**Table 1 BSR table corresponding to the short BSR and the short truncated BSR**

| Index | BS value | Index | BS value | Index | BS value | Index | BS value |
|---|---|---|---|---|---|---|---|
| 0 | 0 | 8 | ≤ 102 | 16 | ≤ 1446 | 24 | ≤ 20516 |
| 1 | ≤ 10 | 9 | ≤ 142 | 17 | ≤ 2014 | 25 | ≤ 28581 |
| 2 | ≤ 14 | 10 | ≤ 198 | 18 | ≤ 2806 | 26 | ≤ 39818 |
| 3 | ≤ 20 | 11 | ≤ 276 | 19 | ≤ 3909 | 27 | ≤ 55474 |
| 4 | ≤ 28 | 12 | ≤ 384 | 20 | ≤ 5446 | 28 | ≤ 77284 |
| 5 | ≤ 38 | 13 | ≤ 535 | 21 | ≤ 7587 | 29 | ≤ 107669 |
| 6 | ≤ 53 | 14 | ≤ 745 | 22 | ≤ 10570 | 30 | ≤ 150000 |
| 7 | ≤ 74 | 15 | ≤ 1038 | 23 | ≤ 14726 | 31 | > 150000 |

**Table 2 BSR table corresponding to the long BSR and the long truncated BSR**

| Index | BS value | Index | BS value | Index | BS value | Index | BS value |
|---|---|---|---|---|---|---|---|
| 0 | 0 | 64 | ≤ 560 | 128 | ≤ 31342 | 192 | ≤ 1754595 |
| 1 | ≤ 10 | 65 | ≤ 597 | 129 | ≤ 33376 | 193 | ≤ 1868488 |
| 2 | ≤ 11 | 66 | ≤ 635 | 130 | ≤ 35543 | 194 | ≤ 1989774 |
| 3 | ≤ 12 | 67 | ≤ 677 | 131 | ≤ 37850 | 195 | ≤ 2118933 |
| 4 | ≤ 13 | 68 | ≤ 720 | 132 | ≤ 40307 | 196 | ≤ 2256475 |
| 5 | ≤ 14 | 69 | ≤ 767 | 133 | ≤ 42923 | 197 | ≤ 2402946 |
| 6 | ≤ 15 | 70 | ≤ 817 | 134 | ≤ 45709 | 198 | ≤ 2558924 |
| 7 | ≤ 16 | 71 | ≤ 870 | 135 | ≤ 48676 | 199 | ≤ 2725027 |
| 8 | ≤ 17 | 72 | ≤ 926 | 136 | ≤ 51836 | 200 | ≤ 2901912 |
| 9 | ≤ 18 | 73 | ≤ 987 | 137 | ≤ 55200 | 201 | ≤ 3090279 |
| 10 | ≤ 19 | 74 | ≤ 1051 | 138 | ≤ 58784 | 202 | ≤ 3290873 |
| 11 | ≤ 20 | 75 | ≤ 1119 | 139 | ≤ 62599 | 203 | ≤ 3504487 |
| 12 | ≤ 22 | 76 | ≤ 1191 | 140 | ≤ 66663 | 204 | ≤ 3731968 |
| 13 | ≤ 23 | 77 | ≤ 1269 | 141 | ≤ 70990 | 205 | ≤ 3974215 |
| 14 | ≤ 25 | 78 | ≤ 1351 | 142 | ≤ 75598 | 206 | ≤ 4232186 |
| 15 | ≤ 26 | 79 | ≤ 1439 | 143 | ≤ 80505 | 207 | ≤ 4506902 |
| 16 | ≤ 28 | 80 | ≤ 1532 | 144 | ≤ 85730 | 208 | ≤ 4799451 |
| 17 | ≤ 30 | 81 | ≤ 1631 | 145 | ≤ 91295 | 209 | ≤ 5110989 |
| 18 | ≤ 32 | 82 | ≤ 1737 | 146 | ≤ 97221 | 210 | ≤ 5442750 |
| 19 | ≤ 34 | 83 | ≤ 1850 | 147 | ≤ 103532 | 211 | ≤ 5796046 |
| 20 | ≤ 36 | 84 | ≤ 1970 | 148 | ≤ 110252 | 212 | ≤ 6172275 |
| 21 | ≤ 38 | 85 | ≤ 2098 | 149 | ≤ 117409 | 213 | ≤ 6572925 |
| 22 | ≤ 40 | 86 | ≤ 2234 | 150 | ≤ 125030 | 214 | ≤ 6999582 |
| 23 | ≤ 43 | 87 | ≤ 2379 | 151 | ≤ 133146 | 215 | ≤ 7453933 |
| 24 | ≤ 46 | 88 | ≤ 2533 | 152 | ≤ 141789 | 216 | ≤ 7937777 |
| 25 | ≤ 49 | 89 | ≤ 2698 | 153 | ≤ 150992 | 217 | ≤ 8453028 |
| 26 | ≤ 52 | 90 | ≤ 2873 | 154 | ≤ 160793 | 218 | ≤ 9001725 |
| 27 | ≤ 55 | 91 | ≤ 3059 | 155 | ≤ 171231 | 219 | ≤ 9586039 |
| 28 | ≤ 59 | 92 | ≤ 3258 | 156 | ≤ 182345 | 220 | ≤ 10208280 |
| 29 | ≤ 62 | 93 | ≤ 3469 | 157 | ≤ 194182 | 221 | ≤ 10870913 |
| 30 | ≤ 66 | 94 | ≤ 3694 | 158 | ≤ 206786 | 222 | ≤ 11576557 |
| 31 | ≤ 71 | 95 | ≤ 3934 | 159 | ≤ 220209 | 223 | ≤ 12328006 |
| 32 | ≤ 75 | 96 | ≤ 4189 | 160 | ≤ 234503 | 224 | ≤ 13128233 |
| 33 | ≤ 80 | 97 | ≤ 4461 | 161 | ≤ 249725 | 225 | ≤ 13980403 |
| 34 | ≤ 85 | 98 | ≤ 4751 | 162 | ≤ 265935 | 226 | ≤ 14887889 |
| 35 | ≤ 91 | 99 | ≤ 5059 | 163 | ≤ 283197 | 227 | ≤ 15854280 |
| 36 | ≤ 97 | 100 | ≤ 5387 | 164 | ≤ 301579 | 228 | ≤ 16883401 |
| 37 | ≤ 103 | 101 | ≤ 5737 | 165 | ≤ 321155 | 229 | ≤ 17979324 |
| 38 | ≤ 110 | 102 | ≤ 6109 | 166 | ≤ 342002 | 230 | ≤ 19146385 |
| 39 | ≤ 117 | 103 | ≤ 6506 | 167 | ≤ 364202 | 231 | ≤ 20389201 |
| 40 | ≤ 124 | 104 | ≤ 6928 | 168 | ≤ 387842 | 232 | ≤ 21712690 |
| 41 | ≤ 132 | 105 | ≤ 7378 | 169 | ≤ 413018 | 233 | ≤ 23122088 |
| 42 | ≤ 141 | 106 | ≤ 7857 | 170 | ≤ 439827 | 234 | ≤ 24622972 |
| 43 | ≤ 150 | 107 | ≤ 8367 | 171 | ≤ 468377 | 235 | ≤ 26221280 |
| 44 | ≤ 160 | 108 | ≤ 8910 | 172 | ≤ 498780 | 236 | ≤ 27923336 |
| 45 | ≤ 170 | 109 | ≤ 9488 | 173 | ≤ 531156 | 237 | ≤ 29735875 |
| 46 | ≤ 181 | 110 | ≤ 10104 | 174 | ≤ 565634 | 238 | ≤ 31666069 |
| 47 | ≤ 193 | 111 | ≤ 10760 | 175 | ≤ 602350 | 239 | ≤ 33721553 |
| 48 | ≤ 205 | 112 | ≤ 11458 | 176 | ≤ 641449 | 240 | ≤ 35910462 |
| 49 | ≤ 218 | 113 | ≤ 12202 | 177 | ≤ 683087 | 241 | ≤ 38241455 |
| 50 | ≤ 233 | 114 | ≤ 12994 | 178 | ≤ 727427 | 242 | ≤ 40723756 |
| 51 | ≤ 248 | 115 | ≤ 13838 | 179 | ≤ 774645 | 243 | ≤ 43367187 |
| 52 | ≤ 264 | 116 | ≤ 14736 | 180 | ≤ 824928 | 244 | ≤ 46182206 |
| 53 | ≤ 281 | 117 | ≤ 15692 | 181 | ≤ 878475 | 245 | ≤ 49179951 |
| 54 | ≤ 299 | 118 | ≤ 16711 | 182 | ≤ 935498 | 246 | ≤ 52372284 |
| 55 | ≤ 318 | 119 | ≤ 17795 | 183 | ≤ 996222 | 247 | ≤ 55771835 |
| 56 | ≤ 339 | 120 | ≤ 18951 | 184 | ≤ 1060888 | 248 | ≤ 59392055 |
| 57 | ≤ 361 | 121 | ≤ 20181 | 185 | ≤ 1129752 | 249 | ≤ 63247269 |
| 58 | ≤ 384 | 122 | ≤ 21491 | 186 | ≤ 1203085 | 250 | ≤ 67352729 |
| 59 | ≤ 409 | 123 | ≤ 22885 | 187 | ≤ 1281179 | 251 | ≤ 71724679 |
| 60 | ≤ 436 | 124 | ≤ 24371 | 188 | ≤ 1364342 | 252 | ≤ 76380419 |
| 61 | ≤ 464 | 125 | ≤ 25953 | 189 | ≤ 1452903 | 253 | ≤ 81338368 |
| 62 | ≤ 494 | 126 | ≤ 27638 | 190 | ≤ 1547213 | 254 | > 81338368 |
| 63 | ≤ 526 | 127 | ≤ 29431 | 191 | ≤ 1647644 | 255 | Reserved |

It can be learned from Table 1 that, for the BSR table corresponding to the short BSR and the short truncated BSR, a meaning of a largest BS interval is "greater than 150 Kbytes". When an actual data amount exceeds 150 Kbytes, the short BSR cannot accurately reflect the actual data amount. This causes an excessively large error for a data frame size of an XR service, which is likely to cause a resource waste or a scheduling delay. For the BSR table corresponding to the long BSR and the long truncated BSR, a step of a BS interval increases as the index value increases, where the step of the BS interval is a difference between BS values corresponding to adjacent index values. For example, within index values of 172 (corresponding to approximately 0.5 Mbytes) to 190 (corresponding to approximately 1.5 Mbytes), the step of the BS interval has reached 30 Kbytes to 90 Kbytes. Consequently, a large error is likely to occur when a BSR is reported for the XR service, resulting in a resource waste. In view of this, it is agreed in current discussion of the 3GPP Rel-18 that a new BSR table is introduced into a standard for the XR service, and a step of a BS interval in the new BSR table is small. When reporting a BSR, UE that supports the new table may determine, based on a network configuration or another principle (for example, depending on whether an amount of to-be-transmitted data falls within a range of the new table), to select one of the new and old BSR tables, and report a corresponding BS value to a network by using a BS index in the selected BSR table.

In addition, to enable the access network device to perceive a delay consumption status of the data and a buffering status of the data in the terminal device, the 3GPP Rel-18 further proposes that the terminal device may report, to the access network device, a remaining time (remaining time) of the data and the data amount of the to-be-transmitted data associated with the remaining time. The remaining time is a time period that can be further used for air interface transmission of the data, for example, may be a PDB or a PSDB minus a time period that the data has remained in a buffer of the terminal device. Generally, after the remaining time ends, the data may be discarded due to timeout. Therefore, the terminal device may assist, by reporting the remaining time in advance, the access network device in performing data scheduling in a timely manner, thereby avoiding timeout. For example, the terminal device notifies the access network device that a remaining time of 500 bytes of data in the buffer of the terminal device is 10 ms, and a remaining time of 1000 bytes of data is 20 ms. In this case, the access network device may first provide 500 bytes of transmission resources for the terminal device, so that the terminal device can transmit urgent data to avoid timeout. For remaining 1000 bytes, the access network device may perform scheduling later, thereby first freeing up a resource to serve another more urgent user.

It can be learned that, the data amount of the to-be-transmitted data of the terminal device needs to be reported in both a scenario in which the new BSR table is used and a scenario in which the remaining time is reported. If different uplink signals are designed for the two scenarios to report information, air interface resource consumption is increased. Moreover, if the access network device receives two different reports sequentially, misunderstanding may occur, and consequently, scheduling cannot be accurately performed based on the buffer of the terminal device.

In view of this, this application provides a communication method, to enhance a design of an uplink signal and improve applicability of the uplink signal.

It should be noted that a remaining time interval described in embodiments of this application may also be described as a remaining time range. The remaining time interval of "t1 to t2" may be understood as (t1, t2], or may be understood as [t1, t2), or may be understood as (t1, t2), or may be understood as [t1, t2]. (t1, t2] is equivalent to t1 < t ≤ t2; [t1, t2) is equivalent to t1 ≤ t < t2; (t1, t2) is equivalent to t1 < t < t2; and [t1, t2] is equivalent to t1 ≤ t ≤t2. For ease of description, in the following embodiments of this application, an example in which "t1 to t2" represents (t1, t2] is mainly used for illustration. For example, a remaining time interval of 0 ms to 10 ms represents (0, 10], and a remaining time interval of 10 ms to 20 ms represents (10, 20].

In embodiments of this application, a preset BS table may also be described as an available (available) BS table, a candidate BS table, or the like. This is not limited in this application.

The following describes in detail the communication method and communication apparatuses provided in this application.

FIG. 4 is a schematic flowchart of a communication method according to an embodiment of this application. As shown in FIG. 4, the communication method includes the following steps S401 and S402. The method shown in FIG. 4 may be performed by a terminal device and an access network device, or the method shown in FIG. 4 may be performed by a chip in the terminal device and a chip in the access network device. For ease of description, an example in which the method is performed by the terminal device and the access network device is mainly used for description in FIG. 4. It should be noted that FIG. 4 is a schematic flowchart of a method embodiment of this application, and shows detailed communication steps or operations of the method. However, these steps or operations are merely examples. Other operations or variants of various operations in FIG. 4 may be further performed in embodiments of this application. In addition, the steps in FIG. 4 may be separately performed in a sequence different from that shown in FIG. 4, and possibly, not all operations in FIG. 4 need to be performed.

S401: The terminal device determines an uplink signal.

The uplink signal herein may be a MAC CE, a radio resource control (radio resource control, RRC) message, a packet data convergence protocol (packet data convergence protocol, PDCP) control protocol data unit (protocol data unit, PDU) (that is, a PDCP control PDU), a radio link control (radio link control, RLC) control PDU (that is, an RLC control PDU), or the like. This is not limited in this application. For ease of understanding, the following mainly uses an example in which the uplink signal is the MAC CE for illustration.

The uplink signal includes information about at least one logical resource (or described as BS information of the at least one logical resource), one logical resource includes at least one piece of to-be-transmitted data (in other words, one or more pieces of to-be-transmitted data), and one piece of to-be-transmitted data corresponds to one remaining time. Generally, one piece of to-be-transmitted data may include one or more data packets. Because information formats of all logical resources are similar, for ease of description, in this embodiment of this application, an information design of one logical resource (described as a first logical resource below) of the at least one logical resource is mainly used as an example for description. Information about the first logical resource includes a first field and/or a second field. The first field indicates remaining time information of to-be-transmitted data in the first logical resource. The second field indicates a first BS table enabled for the first logical resource, there are a plurality of (that is, two or more) preset BS tables configured for the first logical resource, the first BS table is included in the preset BS tables, and the first BS table includes a plurality of BS intervals. Generally, when a remaining time reporting function is configured for the first logical resource, the information about the first logical resource includes the first field; and when there are the plurality of preset BS tables, the information about the first logical resource includes the second field. When the remaining time reporting function is configured for the first logical resource, and there are the plurality of preset BS tables, the information about the first logical resource includes the first field and the second field.

For example, when a length of a BS value field is fixed at 8 bits, the preset BS table in this embodiment of this application may be a BSR table corresponding to a long BSR and a long truncated BSR. When there is one preset BS table, the preset BS table may be the table shown in the foregoing Table 2. When there are two preset BS tables, one of the two preset BS tables may be the table shown in the foregoing Table 2, and the other preset BS table may be a new BSR table introduced into a standard for an XR service, where the new table may include 256 rows. When there are K (where K≥3) preset BS tables, one of the K preset BS tables may be the table shown in the foregoing Table 2, and the other (K-1) preset BS tables may be (K-1) new BSR tables introduced into the standard for the XR service. For ease of description, the table shown in Table 2 may be described as an old table below, and one or more tables newly introduced into the standard for the XR service are referred to as new tables. In view of this, in this embodiment of this application, "there are a plurality of preset BS tables" may also be described as "a new BS table is configured", and "there is one preset BS table" may also be described as "no new BS table is/has been configured".

Optionally, the information about the first logical resource further includes a fifth field, the fifth field indicates a first BS interval to which a data amount of to-be-transmitted data in the first logical resource belongs, and the first BS interval is included in the first BS table.

The logical resource may be a logical channel group, a logical channel, a data radio bearer (data radio bearer, DRB), or the like. This is not limited in this application. In an implementation, when the logical resource is a logical resource group, the MAC CE may include a logical channel group identifier (LCG ID) indicating a specific logical channel group that reported BS information is from, or the MAC CE may include a logical channel group bitmap (LCG bitmap), where each bit corresponds to one logical channel group. When a value of a corresponding bit is "1", it indicates that the MAC CE includes BS information corresponding to an LCG. In another implementation, when the logical resource is the logical channel, the MAC CE may include a logical channel identifier (LCH ID) indicating a specific logical channel that reported BS information is from, or the MAC CE may include a logical channel bitmap (LCH bitmap), where each bit corresponds to one logical channel. When a value of a corresponding bit is "1", it indicates that the MAC CE includes BS information corresponding to an LCH. In still another implementation, when the logical resource is the DRB, the MAC CE may include a DRB identifier (DRB ID) indicating a specific DRB that reported BS information is from, or the MAC CE may include a DRB bitmap (DRB bitmap), where each bit corresponds to one DRB. When a value of a corresponding bit is "1", it indicates that the MAC CE includes BS information corresponding to a DRB. For ease of understanding, the following mainly uses an example in which the logical resource is the logical channel group or the logical channel for description.

Optionally, in this embodiment of this application, the first field may also be described as a remaining time indication field (remaining time indication field or remaining time indication), the second field may also be described as a BS table indication field (BS table indication field or BS table indication), and the fifth field may also be described as a BS value field or a BS value.

The following separately describes different design manners for the MAC CE.

In an implementation 1, when the remaining time reporting function is not configured for the first logical resource, the first field is a reserved field (or it is described as that the first field is considered as a reserved bit (reserved bit), or the first field exists but has no meaning). When there is one preset BS table, the second field is a reserved field (or it is described as that the second field is considered as a reserved bit, or the second field exists but has no meaning).

For example, FIG. 5 is a diagram of a format of the MAC CE according to an embodiment of this application. For example, the uplink signal is the MAC CE, and the logical resource is the logical channel group. As shown in FIG. 5, the MAC CE includes the following fields.
1. Logical channel group identifier (LCG ID) field: The field indicates a logical channel group identifier, indicating a specific logical channel group whose information is reported by using the MAC CE. For example, the logical channel group may be denoted as an LCG x below. Optionally, the LCG ID field may alternatively be replaced with an LCH ID field, indicating a specific logical channel whose information is reported by using the MAC CE. For example, the logical channel may be denoted as an LCH x below. The LCG ID field may alternatively be replaced with a DRB ID field or the like, indicating a specific data radio bearer whose information is reported by using the MAC CE. For example, the data radio bearer may be denoted as a DRB x.
2. First field: When a network configures the remaining time reporting function for the LCG x, the first field indicates a remaining time of to-be-transmitted data in the LCG x; or when a network does not configure the remaining time reporting function for the LCG x, the first field is considered as a reserved bit, and in this case, any value of the first field is meaningless.
3. Second field: When there are the plurality of preset BS tables, the second field indicates a BS table used as a reference for BS value information of the LCG x; or when there is one preset BS table, the second field is considered as a reserved bit, and in this case, any value of the second field is meaningless.
4. BS value field (or referred to as the fifth field): The field indicates an index number of a buffered data amount, and is used to determine an amount of the to-be-transmitted data in the LCG x in a corresponding BS table based on the index number. The MAC CE includes at least one BS value field, or may include a plurality of BS value fields.
5. Retained/Reserved bit (that is, R): This field has no specific meaning, is used to achieve byte alignment in the MAC CE format, and does not necessarily exist.

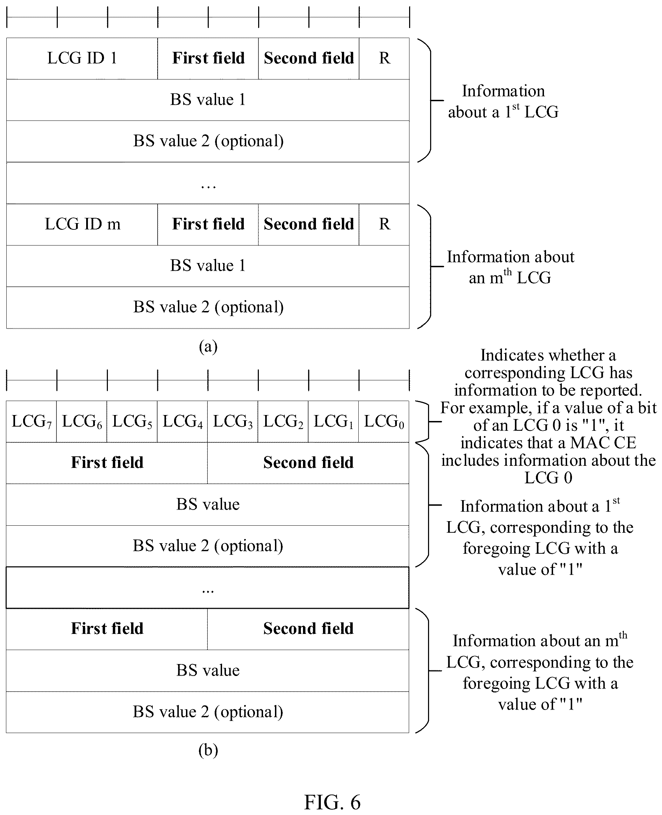

It should be understood that only reporting of information about one LCG is considered in the example provided in FIG. 5. If BS information of a plurality of LCGs needs to be reported, the BS information may be respectively reported in separate MAC CEs, or the information about the plurality of LCGs may be simultaneously carried in one MAC CE. There may be a plurality of MAC CE formats in which the MAC CE simultaneously carries the information about the plurality of LCGs. For example, (a) and (b) in FIG. 6 respectively provide two possible implementations. As shown in (a) in FIG. 6, the MAC CE includes the information about the plurality of LCGs, and information about each LCG may include an LCG ID, a first field, a second field, and one or more BS value fields. As shown in (b) in FIG. 6, the MAC CE includes an 8-bit bitmap indicating whether a corresponding LCG has information to be reported. For example, if a value of a bit of an LCG 0 is "1", it indicates that the MAC CE includes information about the LCG 0. Information corresponding to each LCG with a bit having a value of "1" includes a first field, a second field, and one or more BS value fields.

Optionally, when one MAC CE includes information about a plurality of LCGs, the information about the LCGs may be arranged according to one of the following rules:
Rule 1: Arrangement is performed based on values of LCG identifiers. For example, arrangement is performed in the MAC CE in ascending order of the LCG identifiers, or arrangement is performed in the MAC CE in descending order of the LCG identifiers.
Rule 2: Arrangement is performed based on priorities of the LCGs. For example, arrangement is performed in descending order of the priorities of the LCGs. The priority of the LCG herein may be determined based on a priority of an LCH included in the LCG. For example, the priority of the LCG is equal to a highest priority of the LCH included in the LCG.
Rule 3: Arrangement is performed based on values of remaining times. For example, arrangement is performed in ascending order of the remaining times. If the BS information of the LCGs includes remaining times, an LCG with a smallest remaining time is ranked first. An LCG that does not include remaining time information is ranked after all LCGs that include remaining time information. If a plurality of LCGs have a same remaining time, arrangement is performed based on values of LCG identifiers or priorities of the LCGs.

It should be noted that, in the implementation 1, meanings of the first field and the second field are changed, so that the MAC CE in the unified format can be used for different scenarios and different configurations, thereby conveying different meanings. Both separate use and simultaneous use of two functions of the remaining time and the new BS table are supported. This avoids repetition or a conflict of reported information and also ensures network flexibility and configurability.

In an implementation 2, the information about the first logical resource further includes a third field and/or a fourth field. The third field indicates whether the first field exists, and the fourth field indicates whether the second field exists. To be specific, the third field and the fourth field are two flag fields, where one flag field indicates whether the MAC CE includes the first field, and the other flag field indicates whether the MAC CE includes the second field.

In the implementation 2, when the third field indicates that the first field exists, the information about the first logical resource includes the first field; or when the third field indicates that the first field does not exist, the information about the first logical resource does not include the first field. When the fourth field indicates that the second field exists, the information about the first logical resource includes the second field; or when the fourth field indicates that the second field does not exist, the information about the first logical resource does not include the second field. Generally, when the remaining time reporting function is configured for the first logical resource, the third field indicates that the first field exists; or when the remaining time reporting function is not configured for the first logical resource, the third field indicates that the first field does not exist. When there are the plurality of preset BS tables, the fourth field indicates that the second field exists; or when there is one preset BS table, the fourth field indicates that the second field does not exist.

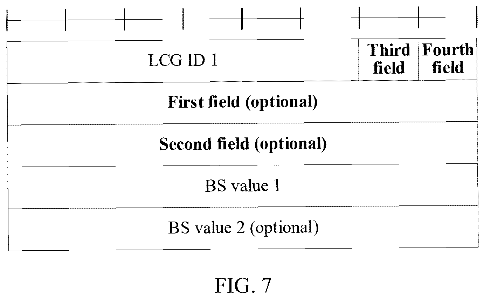

For example, FIG. 7 is a diagram of another format of the MAC CE according to an embodiment of this application. For example, the uplink signal is the MAC CE, and the logical resource is the logical channel. As shown in FIG. 7, the MAC CE includes the following fields.
1. Logical channel group identifier (LCG ID) field: The field indicates a logical channel group identifier, indicating a specific logical channel group whose information is reported by using the MAC CE. For example, the logical channel group may be denoted as an LCG x below. Optionally, the LCG ID field may alternatively be replaced with an LCH ID field, indicating a specific logical channel whose information is reported by using the MAC CE. For example, the logical channel may be denoted as an LCH x below. The LCG ID field may alternatively be replaced with a DRB ID field or the like, indicating a specific data radio bearer whose information is reported by using the MAC CE. For example, the data radio bearer may be denoted as a DRB x.
2. Third field: The field indicates whether the MAC CE includes a field, that is, a first field in the figure, indicating a remaining time. For example, when a value of the third field is "1", it indicates that the first field exists; or when a value of the third field is "0", it indicates that the first field does not exist.
3. Fourth field: The field indicates whether the MAC CE includes a field, that is, a second field in the figure, indicating a BS table. For example, when a value of the fourth field is "1", it indicates that the second field exists; or when a value of the fourth field is "0", it indicates that the second field does not exist.
4. First field: When the third field indicates that the first field exists (for example, when the value of the third field is "1"), the first field exists. The first field indicates a remaining time of to-be-transmitted data in the LCG x.
5. Second field: When the fourth field indicates that the second field exists (for example, when the value of the fourth field is "1"), the first field exists. The second field indicates a BS table used as a reference for BS value information of the LCG x.
6. BS value field (or referred to as the fifth field): The field indicates an index number of a buffered data amount, and is used to determine an amount of the to-be-transmitted data in the LCG x in a corresponding BS table based on the index number. The MAC CE includes at least one BS value field, or may include a plurality of BS value fields.

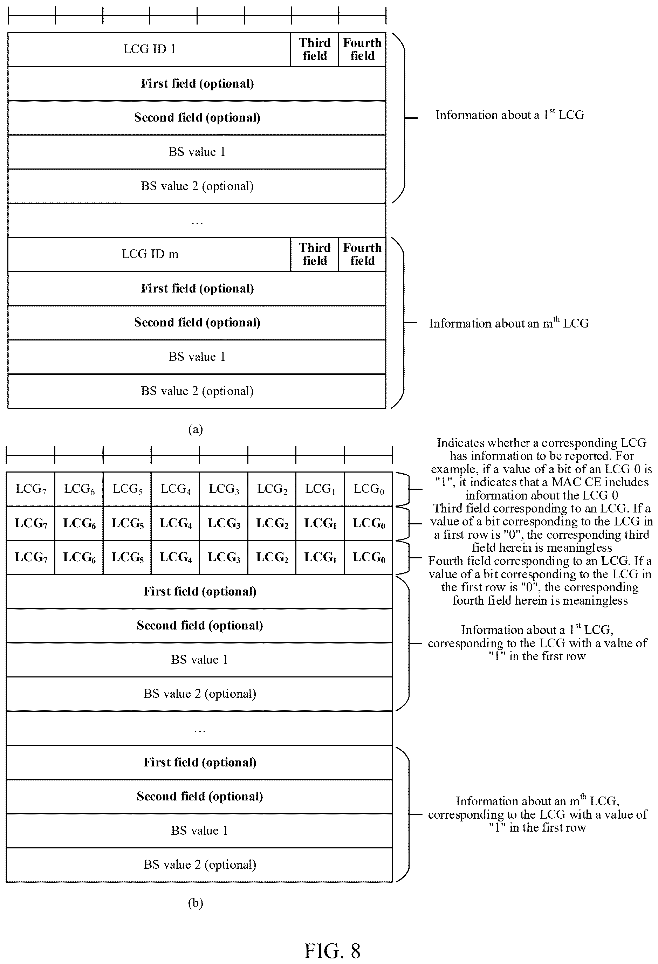

It should be understood that only reporting of information about one LCG is considered in the example provided in FIG. 7. If BS information of a plurality of LCGs needs to be reported, the BS information may be respectively reported in separate MAC CEs, or the information about the plurality of LCGs may be simultaneously carried in one MAC CE. There may be a plurality of MAC CE formats in which the MAC CE simultaneously carries the information about the plurality of LCGs. For example, (a) and (b) in FIG. 8 respectively provide two possible implementations. As shown in (a) in FIG. 8, the MAC CE includes the information about the plurality of LCGs, and information about each LCG may include an LCG ID, a third field, a fourth field, a first field (optional), a second field (optional), and one or more BS value fields. As shown in (b) in FIG. 8, the MAC CE includes three 8-bit bitmaps. An 8-bit bitmap in a first row indicates whether a corresponding LCG has information to be reported. For example, if a value of a bit of an LCG 0 is "1", it indicates that the MAC CE includes information about the LCG 0. An 8-bit bitmap in a second row represents a third field corresponding to an LCG. If a value of a bit corresponding to the LCG in the first row is "0", a value of the corresponding third field herein is meaningless (or the corresponding third field is a reserved bit). For example, if a value of a bit of an LCG 1 in the first row is "0", a bit of the LCG 1 in the second row is meaningless. For another example, if the value of the bit of the LCG 0 in the first row is "1", a bit of the LCG 0 in the second row indicates whether the information about the LCG 0 includes a first field. An 8-bit bitmap in a third row represents a fourth field corresponding to the LCG. If the value of the bit corresponding to the LCG in the first row is "0", a value of the corresponding fourth field herein is meaningless (or the corresponding fourth field is a reserved bit). For example, if the value of the bit of the LCG 1 in the first row is "0", a bit of the LCG 1 in the third row is meaningless. For another example, if the value of the bit of the LCG 0 in the first row is "1", a bit of the LCG 0 in the third row indicates whether the information about the LCG 0 includes a second field. Information corresponding to each LCG with a bit having a value of "1" in the first row includes a first field (optional), a second field (optional), and one or more BS value fields.

Optionally, when one MAC CE includes information about a plurality of LCGs, the information about the LCGs may be arranged according to any one of the three rules described in the implementation 1.

Optionally, in the implementation 2, when the information about the first logical resource includes the third field (and does not include the fourth field), if the third field indicates that the first field does not exist, the information about the first logical resource does not include the first field and includes the second field. In other words, when the third field indicates that the first field does not exist, the separate fourth field is not required to indicate whether the second field exists, but the second field is directly included, and the second field indicates a used BS table. In this way, a useless field can be further reduced, thereby helping reduce air interface resource consumption.

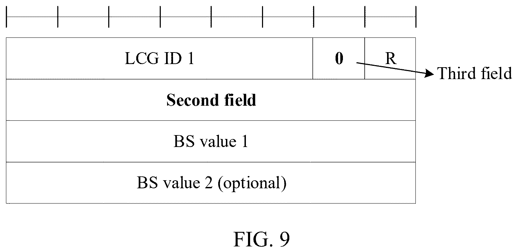

For example, FIG. 9 is a diagram of another format of the MAC CE according to an embodiment of this application. For example, the uplink signal is the MAC CE, and the logical resource is the logical channel. The MAC CE includes a third field, and a value of the third field is "0", indicating that a first field is not included and a second field is included.

It should be noted that the third field and the fourth field are introduced into the implementation 2, so that the MAC CE includes different content in different configurations, to support different network functions. Compared with the implementation 1, in the implementation 2, a useless field that may exist in the MAC CE is further reduced, thereby reducing air interface resource consumption. The third field or the fourth field can be flexibly combined, so that both separate use and simultaneous use of two functions of the remaining time and a new BS table are supported. This avoids repetition or a conflict of reported information and also ensures network flexibility and configurability.

In an implementation 3, when the remaining time reporting function is configured for the first logical resource, and there is one preset BS table, the information about the first logical resource includes the first field and does not include the second field. When the remaining time reporting function is not configured for the first logical resource, and there are the plurality of preset BS tables, the information about the first logical resource includes the second field and does not include the first field. When the remaining time reporting function is configured for the first logical resource, and there are the plurality of preset BS tables, the information about the first logical resource includes the first field and the second field.

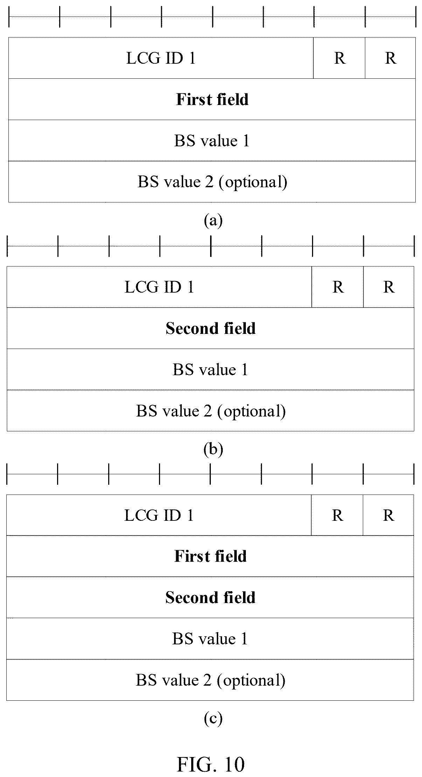

For example, FIG. 10 is a diagram of another format of the MAC CE according to an embodiment of this application. For example, the uplink signal is the MAC CE, and the logical resource is the logical channel.

As shown in (a) in FIG. 10, when a network configures the remaining time reporting function, and there is one preset BS table, the information about the first logical resource includes the first field and does not include the second field. It may be understood that the MAC CE may further include a BS value field (or referred to as the fifth field).

As shown in (b) in FIG. 10, when a network does not configure the remaining time reporting function, and there are the plurality of preset BS tables, the MAC CE includes the second field and does not include the first field. It may be understood that the MAC CE may further include a BS value field.

As shown in (c) in FIG. 10, when a network configures the remaining time reporting function, and there are the plurality of preset BS tables, the MAC CE includes the first field and the second field. It may be understood that the MAC CE may further include a BS value field.

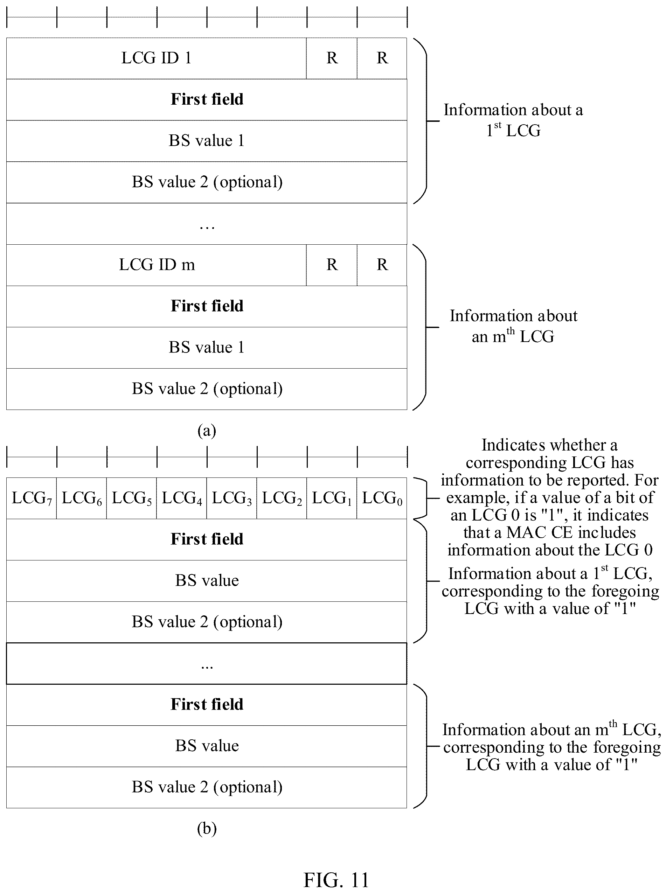

It should be understood that only reporting of information about one LCG is considered in the example provided in FIG. 10. If BS information of a plurality of LCGs needs to be reported, the BS information may be respectively reported in separate MAC CEs, or the information about the plurality of LCGs may be simultaneously carried in one MAC CE. There may be a plurality of MAC CE formats in which the MAC CE simultaneously carries the information about the plurality of LCGs. For example, (a) and (b) in FIG. 11 to FIG. 13 respectively provide two possible implementations in different network configurations.

As shown in (a) in FIG. 11, information about each LCG may include an LCG ID, a first field, and one or more BS value fields. As shown in (b) in FIG. 11, the MAC CE includes an 8-bit bitmap indicating whether a corresponding LCG has information to be reported. For example, if a value of a bit of an LCG 0 is "1", it indicates that the MAC CE includes information about the LCG 0. Information corresponding to each LCG with a bit having a value of "1" includes a first field and one or more BS value fields.

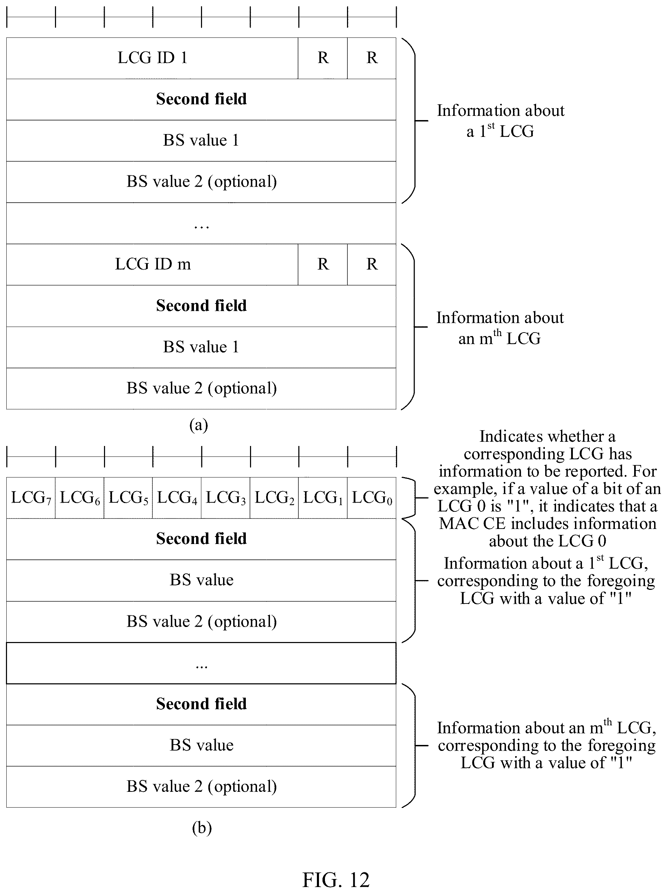

As shown in (a) in FIG. 12, information about each LCG may include an LCG ID, a second field, and one or more BS value fields. As shown in (b) in FIG. 12, the MAC CE includes an 8-bit bitmap indicating whether a corresponding LCG has information to be reported. For example, if a value of a bit of an LCG 0 is "1", it indicates that the MAC CE includes information about the LCG 0. Information corresponding to each LCG with a bit having a value of "1" includes a second field and one or more BS value fields.

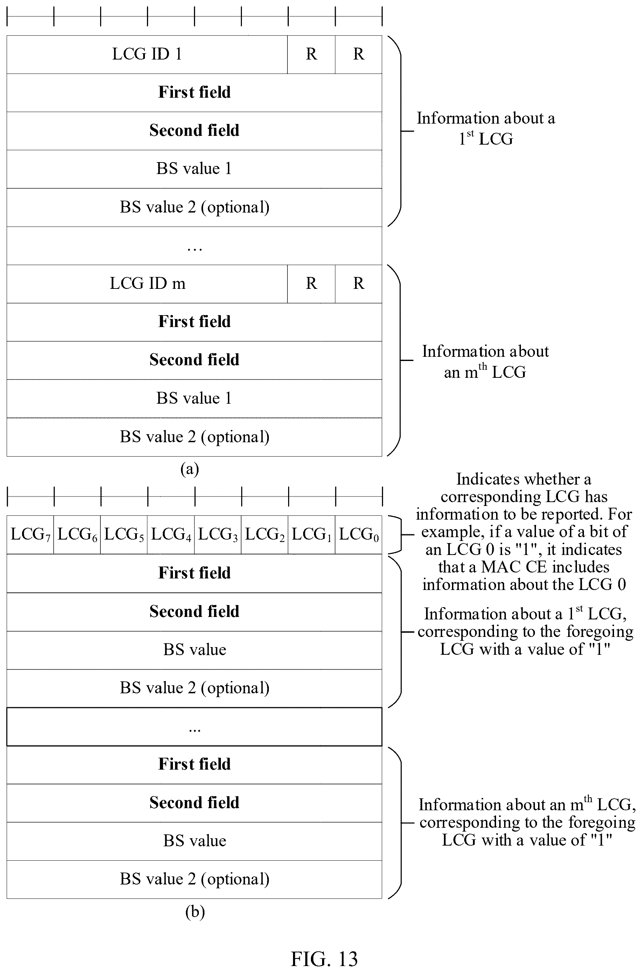

As shown in (a) in FIG. 13, information about each LCG may include an LCG ID, a first field, a second field, and one or more BS value fields. As shown in (b) in FIG. 13, the MAC CE includes an 8-bit bitmap indicating whether a corresponding LCG has information to be reported. For example, if a value of a bit of an LCG 0 is "1", it indicates that the MAC CE includes information about the LCG 0. Information corresponding to each LCG with a bit having a value of "1" includes a first field, a second field, and one or more BS value fields.

Optionally, when one MAC CE includes information about a plurality of LCGs, the information about the LCGs may be arranged according to any one of the three rules described in the implementation 1.

It should be noted that, in the implementation 3, the plurality of different formats are directly designed for the MAC CE, and the terminal device selects a corresponding format based on a network configuration. In this way, no additional indication information needs to be carried, thereby further reducing air interface resource consumption.

Optionally, in the foregoing implementation 1 to implementation 3, when one MAC CE including information about a plurality of LCGs cannot be completely transmitted due to a limited/an insufficient uplink resource, the terminal device may perform truncation processing on the MAC CE, in other words, generate a shorter MAC CE (truncated MAC CE), to convey information to the access network device within a resource range as much as possible. Specifically, the terminal device may follow an order of the plurality of LCGs and use the information about the LCG as a unit. When finding that a size of the MAC CE exceeds a size of an available transmission resource after information about one more LCG is added, the terminal device stops adding information about more LCGs to the MAC CE, in other words, generates the MAC CE including BS information of only a part of the LCGs. In this case, the terminal device may include information in the MAC CE to indicate that a part of the LCGs have to-be-transmitted data but related BS information of the part of the LCGs is not included in the MAC CE. For example, in the MAC CE formats shown in (b) in FIG. 6, (b) in FIG. 8, (b) in FIG. 11, (b) in FIG. 12, and (b) in FIG. 13, if truncation occurs, for example, assuming that an LCG 7 has to-be-transmitted data but BS information cannot be included in the MAC CE, a bit corresponding to the LCG 7 in the first row in the figure may still be padded with "1".

The following separately describes several possible forms of the first field, the second field, and the fifth field (that is, the BS value field) in the foregoing implementation 1 to implementation 3.

As described above, the first logical resource may include at least one piece of to-be-transmitted data, and one piece of to-be-transmitted data corresponds to one remaining time.

(I) That the first field indicates the remaining time information of the to-be-transmitted data in the first logical resource may include the following several cases.

Case 1: The first field indicates a smallest remaining time in a remaining time corresponding to the at least one piece of to-be-transmitted data. To be specific, the first field may indicate a specific value of the smallest remaining time, for example, 3 ms, indicating that a smallest remaining time of data in the first logical resource (for example, the LCG x) is 3 ms.

Case 2: The first field indicates a remaining time interval to which a smallest remaining time in a remaining time corresponding to the at least one piece of to-be-transmitted data belongs. In other words, the first field may indicate a specific remaining time interval, for example, indicate the remaining time interval to which the smallest remaining time belongs. For example, it is assumed that the network and the terminal device agree in advance, in a predefined or preconfigured manner, on four remaining time intervals: 0 ms to 5 ms, 5 ms to 10 ms, 10 ms to 15 ms, and 15 ms to 20 ms. The first field includes 2 bits. When a value of the 2 bits is "00", it indicates that a smallest remaining time of data in the first logical resource falls within the range of 0 ms to 5 ms. When a value of the 2 bits is "01", it indicates that a smallest remaining time of data in the first logical resource falls within the range of 5 ms to 10 ms. When a value of the 2 bits is "10", it indicates that a smallest remaining time of data in the first logical resource falls within the range of 10 ms to 15 ms. When a value of the 2 bits is "11", it indicates that a smallest remaining time of data in the first logical resource falls within the range of 15 ms to 20 ms. For another example, it is assumed that the first field includes 4 bits, and each of the 4 bits corresponds to one remaining time interval. The network and the terminal device agree in advance, in a predefined or preconfigured manner, that starting from a least significant bit, the 4 bits respectively correspond to four remaining time intervals: 0 ms to 5 ms, 5 ms to 10 ms, 10 ms to 15 ms, and 15 ms to 20 ms in ascending order of the bits. When a value of a corresponding bit is "1", it indicates that a smallest remaining time of data in the first logical resource falls within a remaining time interval corresponding to the bit.

For example, it is assumed that the first logical resource includes three pieces of to-be-transmitted data (to-be-transmitted data 1, to-be-transmitted data 2, and to-be-transmitted data 3), where a remaining time corresponding to the to-be-transmitted data 1 is 3 ms, a remaining time corresponding to the to-be-transmitted data 2 is 7 ms, and a remaining time corresponding to the to-be-transmitted data 3 is 9 ms. In this case, the first field may be "0001", indicating that the remaining time interval within which the smallest remaining time (that is, 3 ms) of the data in the first logical resource falls is 0 ms to 5 ms.

For another example, it is assumed that the first logical resource includes three pieces of to-be-transmitted data (to-be-transmitted data 1, to-be-transmitted data 2, and to-be-transmitted data 3), where a remaining time corresponding to the to-be-transmitted data 1 is 3 ms, a remaining time corresponding to the to-be-transmitted data 2 is 8 ms, and a remaining time corresponding to the to-be-transmitted data 3 is 18 ms. In this case, the first field may be "0001", indicating that the remaining time interval within which the smallest remaining time (that is, 3 ms) of the data in the first logical resource falls is 0 ms to 5 ms.

Case 3: The first field indicates a remaining time interval to which a remaining time corresponding to the at least one piece of to-be-transmitted data respectively belongs. To be specific, the first field may indicate a plurality of remaining time intervals. For example, the first field includes 2 bits. It is agreed in advance, in a predefined or preconfigured manner, that a low-order bit represents a remaining time interval of 0 ms to 10 ms, and a high-order bit represents a remaining time interval of 10 ms to 20 ms. When a corresponding bit is "1", it indicates that the first logical resource includes data whose remaining time falls within a range of a corresponding remaining time interval.

For example, it is assumed that the first logical resource includes three pieces of to-be-transmitted data (to-be-transmitted data 1, to-be-transmitted data 2, and to-be-transmitted data 3), where a remaining time corresponding to the to-be-transmitted data 1 is 3 ms, a remaining time corresponding to the to-be-transmitted data 2 is 7 ms, and a remaining time corresponding to the to-be-transmitted data 3 is 9 ms. In this case, the first field may be "01", indicating that the first logical resource includes data whose remaining time falls within the range of 0 ms to 10 ms, and does not include data whose remaining time falls within the range of 10 ms to 20 ms.

For another example, it is assumed that the first logical resource includes three pieces of to-be-transmitted data (to-be-transmitted data 1, to-be-transmitted data 2, and to-be-transmitted data 3), where a remaining time corresponding to the to-be-transmitted data 1 is 3 ms, a remaining time corresponding to the to-be-transmitted data 2 is 8 ms, and a remaining time corresponding to the to-be-transmitted data 3 is 18 ms. In this case, the first field may be "11", indicating that the first logical resource includes both data whose remaining time falls within the range of 0 ms to 10 ms, and data whose remaining time falls within the range of 10 ms to 20 ms.

(II) That the second field indicates the first BS table enabled for the first logical resource may include the following several cases.

Case (1): The second field indicates one first BS table, the first BS table is one of the plurality of preset BS tables, and the first BS table is used as a reference for first BS intervals indicated by all BS value fields in the information about the first logical resource.

For example, assuming that there are two preset BS tables (that is, one old table and one new table), the second field may have only 1 bit, indicating whether the new BS table or the old BS table should be used as a reference for searching for all the BS value fields related to the first logical resource in the MAC CE. For example, "1" indicates the new table, and "0" indicates the old table; or "0" indicates the new table, and "1" indicates the old table. For ease of understanding, when there are two preset BS tables, in this embodiment of this application, an example in which "1" represents the new table, and "0" represents the old table is used for illustration.

For another example, assuming that there are three preset BS tables (that is, one old table and two new tables), the second field may have 2 bits, indicating a specific table that should be used as a reference for all the BS value fields related to the first logical resource in the MAC CE. For example, "00" represents the old table, "01" represents a new table 1, and "10" represents a new table 2.

Case (2): The second field indicates a plurality of first BS tables, any one of the plurality of first BS tables is one of the plurality of preset BS tables, a quantity of the plurality of first BS tables is equal to a quantity of BS value fields (where in this case, there are a plurality of BS value fields, for example, the quantity of BS value fields is equal to a quantity of remaining time intervals indicated by the first field), the plurality of first BS tables are in one-to-one correspondence with the plurality of BS value fields, and one corresponding first BS table is used as a reference for a first BS interval indicated by one BS value field.

For example, the second field may have a plurality of bits, and a quantity of the bits included in the second field is the same as the quantity of BS value fields that may be included in the MAC CE. Each bit corresponds to one BS value, and indicates whether a new table or an old table should be used as a reference for searching for the BS value. For example, if the case (2) is adopted, assuming that the MAC CE includes two BS value fields (a BS value 1 and a BS value 2), where the BS value 1 has a value of "01000000(64)", and the BS value 2 has a value of "00000111(7)", the second field also includes 2 bits, and it is agreed in advance, in a predefined or preconfigured manner, that a low-order bit corresponds to the BS value 1, and a high-order bit corresponds to the BS value 2. If a value of the second field is "10", it indicates that the old table should be used as a reference for searching for an index in the BS value 1, and the new table should be used as a reference for searching for an index in the BS value 2.

Case (3): The second field indicates a plurality of first BS tables, any one of the plurality of first BS tables is one of the plurality of preset BS tables, a quantity of the plurality of first BS tables is equal to a quantity of bits included in the first field (where in this case, the first field corresponds to the foregoing case 3), the plurality of first BS tables are in one-to-one correspondence with a plurality of bits included in the first field, and one bit indicates that one corresponding first BS table is used as a reference for a first BS interval indicated by a BS value field associated with one remaining time interval corresponding to the bit.

For example, the second field has a plurality of bits, and a quantity of the bits included in the second field is the same as the quantity of bits in the first field (that is, the first field corresponds to the case 3). When each bit in the first field corresponds to one remaining time interval, each bit in the second field corresponds to a BS value associated with the remaining time interval (for example, a BS value field corresponds to a case ④), and indicates whether a new table or an old table is used as a reference for the BS value. If a specific bit in the first field is "0" (which indicates that data corresponding to a remaining time interval does not exist), a corresponding bit in the second field is meaningless.

For example, if the case (3) is adopted, assuming that the first field in the MAC CE includes 2 bits, and it is agreed in advance, in a predefined or preconfigured manner, that a low-order bit represents a remaining time interval of 0 ms to 10 ms, and a high-order bit represents a remaining time interval of 10 ms to 20 ms, and assuming that the first logical resource includes three pieces of to-be-transmitted data (to-be-transmitted data 1, to-be-transmitted data 2, and to-be-transmitted data 3), where a remaining time corresponding to the to-be-transmitted data 1 is 3 ms, a remaining time corresponding to the to-be-transmitted data 2 is 7 ms, and a remaining time corresponding to the to-be-transmitted data 3 is 9 ms, the first field may be "01", indicating that the first logical resource includes data whose remaining time falls within the range of the remaining time interval of 0 ms to 10 ms, and does not include data whose remaining time falls within the range of the interval of 10 ms to 20 ms. In view of this, it may be further determined that the second field also includes 2 bits (this is because the quantity of the bits included in the second field is the same as the quantity of bits in the first field), where a low-order bit in the second field corresponds to the low-order bit in the first field, and a high-order bit in the second field corresponds to the high-order bit in the first field. If a value of the second field is "10", in combination with the value "01" of the first field, it may be determined that a value of the high-order bit in the second field (that is, "1" in the second field) is meaningless (this is because a value of the high-order bit in the first field is "0", indicating that data corresponding to the remaining time interval of 10 ms to 20 ms does not exist), and a value of the low-order bit in the second field (that is, "0" in the second field) represents the old table, and indicates that the old table should be used as a reference for searching for an index in a BS value associated with the remaining time interval of 0 ms to 10 ms, in other words, the old table should be used as a reference for searching for a sum of data amounts of the to-be-transmitted data 1, the to-be-transmitted data 2, and the to-be-transmitted data 3.

For another example, if the case (3) is adopted, assuming that the first field in the MAC CE includes 2 bits, and it is agreed in advance, in a predefined or preconfigured manner, that a low-order bit represents a remaining time interval of 0 ms to 10 ms, and a high-order bit represents a remaining time interval of 10 ms to 20 ms, and assuming that the first logical resource includes three pieces of to-be-transmitted data (to-be-transmitted data 1, to-be-transmitted data 2, and to-be-transmitted data 3), where a remaining time corresponding to the to-be-transmitted data 1 is 3 ms, a remaining time corresponding to the to-be-transmitted data 2 is 8 ms, and a remaining time corresponding to the to-be-transmitted data 3 is 18 ms, the first field may be "11", indicating that the first logical resource includes both data whose remaining time falls within the range of the remaining time interval of 0 ms to 10 ms, and data whose remaining time falls within the range of the interval of 10 ms to 20 ms. In view of this, it may be further determined that the second field also includes 2 bits (this is because the quantity of the bits included in the second field is the same as the quantity of bits in the first field), where a low-order bit in the second field corresponds to the low-order bit in the first field, and a high-order bit in the second field corresponds to the high-order bit in the first field. If a value of the second field is "10", in combination with the value "11" of the first field, it may be determined that a value (that is, "1") of the high-order bit in the second field represents the new table, and indicates that the new table should be used as a reference for searching for an index in a BS value associated with the remaining time interval of 10 ms to 20 ms, in other words, the new table should be used as a reference for searching for a data amount of the to-be-transmitted data 3; and a value (that is, "0") of the low-order bit in the second field represents the old table, and indicates that the old table should be used as a reference for searching for an index in a BS value associated with the remaining time interval of 0 ms to 10 ms, in other words, the old table should be used as a reference for searching for a sum of data amounts of the to-be-transmitted data 1 and the to-be-transmitted data 2.

Optionally, if more than one new BS table exists (that is, two or more new tables exist), the second field may have a plurality of bits, indicating an index number of one or more BS tables. For example, every two bits indicate an index number of one BS table. Optionally, a quantity of BS tables that can be indicated by the second field is related to a quantity of remaining time intervals that can be indicated by the first field or a quantity of BS value fields existing in the MAC CE.

(III) That the BS value field indicates the first BS interval to which the data amount of the to-be-transmitted data in the first logical resource belongs may include the following several cases.

Case ①: There is one BS value field, and the BS value field indicates a first BS interval to which a total data amount of all to-be-transmitted data in the first logical resource belongs. In other words, the MAC CE includes only one BS value field, indicating a total amount of to-be-transmitted data in the first logical resource.

For example, it is assumed that the first logical resource includes three pieces of to-be-transmitted data (to-be-transmitted data 1, to-be-transmitted data 2, and to-be-transmitted data 3), where a data amount of the to-be-transmitted data 1 is 500 bytes, a data amount of the to-be-transmitted data 2 is 1000 bytes, and a data amount of the to-be-transmitted data 3 is 2000 bytes. If the case ① is adopted, and Table 2 (that is, an old table) is used, a value of the BS value field is "01011110(94)", which corresponds to (3469, 3694].

Alternatively, it is assumed that the first logical resource includes three pieces of to-be-transmitted data (to-be-transmitted data 1, to-be-transmitted data 2, and to-be-transmitted data 3), where a data amount of the to-be-transmitted data 1 is 150 bytes, a data amount of the to-be-transmitted data 2 is 300 bytes, and a data amount of the to-be-transmitted data 3 is 100 bytes. If the case ① is adopted, and Table 2 (that is, an old table) is used, a value of the BS value field is "01000000(64)", which corresponds to (526, 560].

Case ②: There is one BS value field, and the BS value field indicates a first BS interval to which a data amount of to-be-transmitted data within a smallest remaining time in a remaining time corresponding to the at least one piece of to-be-transmitted data belongs. In other words, when the first field indicates a smallest remaining time or a smallest remaining time interval, only one BS value field exists in the MAC CE, and indicates an amount of to-be-transmitted data whose remaining time is smallest or falls within the smallest remaining time interval in the first logical resource.

For example, it is assumed that the first logical resource includes three pieces of to-be-transmitted data (to-be-transmitted data 1, to-be-transmitted data 2, and to-be-transmitted data 3), where a data amount of the to-be-transmitted data 1 is 500 bytes and a remaining time of the to-be-transmitted data 1 is 3 ms, a data amount of the to-be-transmitted data 2 is 1000 bytes and a remaining time of the to-be-transmitted data 2 is 7 ms, and a data amount of the to-be-transmitted data 3 is 2000 bytes and a remaining time of the to-be-transmitted data 3 is 9 ms. If the case ② is adopted, and Table 2 (that is, an old table) is used, a value of the BS value field is "00111111(63)", that is, (494, 526].

Alternatively, it is assumed that the first logical resource includes three pieces of to-be-transmitted data (to-be-transmitted data 1, to-be-transmitted data 2, and to-be-transmitted data 3), where a data amount of the to-be-transmitted data 1 is 150 bytes and a remaining time of the to-be-transmitted data 1 is 3 ms, a data amount of the to-be-transmitted data 2 is 300 bytes and a remaining time of the to-be-transmitted data 2 is 8 ms, and a data amount of the to-be-transmitted data 3 is 100 bytes and a remaining time of the to-be-transmitted data 3 is 18 ms. If the case ② is adopted, and Table 2 (that is, an old table) is used, a value of the BS value field is 00101011(43), that is, (141, 150].

Case ③: There are two BS value fields, one BS value field indicates a first BS interval to which a total data amount belongs, and the other BS value field indicates a first BS interval to which a data amount of to-be-transmitted data within a smallest remaining time belongs. To be specific, when the first field indicates the smallest remaining time or a smallest remaining time interval, two BS value fields exist in the MAC CE. One BS value field indicates an amount of to-be-transmitted data whose remaining time is smallest or falls within the smallest remaining time interval in the first logical resource, and the other BS value field indicates an amount of to-be-transmitted data other than the data amount corresponding to the smallest remaining time interval in the first logical resource, or indicates a total amount of to-be-transmitted data in the first logical resource. It may be understood that, in this embodiment of this application, the amount of the to-be-transmitted data corresponding to the smallest remaining time interval + the amount of the to-be-transmitted data other than the data amount corresponding to the smallest remaining time interval = the total data amount of all the to-be-transmitted data in the first logical resource.

For example, it is assumed that the first logical resource includes three pieces of to-be-transmitted data (to-be-transmitted data 1, to-be-transmitted data 2, and to-be-transmitted data 3), where a data amount of the to-be-transmitted data 1 is 500 bytes and a remaining time of the to-be-transmitted data 1 is 3 ms, a data amount of the to-be-transmitted data 2 is 1000 bytes and a remaining time of the to-be-transmitted data 2 is 7 ms, and a data amount of the to-be-transmitted data 3 is 2000 bytes and a remaining time of the to-be-transmitted data 3 is 9 ms. If the case ③ is adopted, and Table 2 (that is, an old table) is used, a value of one BS value field (that is, the first BS interval to which the data amount of the to-be-transmitted data within the smallest remaining time belongs) is "00111111(63)", that is, (494, 526]; and a value of the other BS value field (indicating the first BS interval to which the total data amount belongs) is "01011110(94)", that is, (3469, 3694].

Alternatively, it is assumed that the first logical resource includes three pieces of to-be-transmitted data (to-be-transmitted data 1, to-be-transmitted data 2, and to-be-transmitted data 3), where a data amount of the to-be-transmitted data 1 is 150 bytes and a remaining time of the to-be-transmitted data 1 is 3 ms, a data amount of the to-be-transmitted data 2 is 300 bytes and a remaining time of the to-be-transmitted data 2 is 8 ms, and a data amount of the to-be-transmitted data 3 is 100 bytes and a remaining time of the to-be-transmitted data 3 is 18 ms. If the case ③ is adopted, and Table 2 (that is, an old table) is used, a value of one BS value field (that is, the first BS interval to which the data amount of the to-be-transmitted data within the smallest remaining time belongs) is "00101011(43)", that is, (141, 150]; and a value of the other BS value field (indicating the first BS interval to which the total data amount belongs) is "01000000(64)", that is (526, 560].

Case ④: A quantity of BS value fields is equal to a quantity of remaining time intervals indicated by the first field, one BS value field corresponds to one remaining time interval in the remaining time interval indicated by the first field, and the BS value field indicates a first BS interval to which a data amount of to-be-transmitted data whose remaining time falls within the remaining time interval in the first logical resource belongs. To be specific, when the first field indicates a plurality of remaining time intervals (that is, the first field corresponds to the case 3), one or more BS value fields exist in the MAC CE. The quantity of BS value fields depends on a quantity of bits having a value of "1" in the first field. Each BS value field corresponds to one remaining time interval, and indicates a first BS interval to which an amount of to-be-transmitted data whose remaining time falls within the remaining time interval in the first logical resource belongs.

For example, it is assumed that the first field includes 2 bits, and it is agreed in advance in a predefined or preconfigured manner that a low-order bit represents a remaining time interval of 0 ms to 10 ms, and a high-order bit represents a remaining time interval of 10 ms to 20 ms; and the first logical resource includes three pieces of to-be-transmitted data (to-be-transmitted data 1, to-be-transmitted data 2, and to-be-transmitted data 3), where a data amount of the to-be-transmitted data 1 is 500 bytes and a remaining time of the to-be-transmitted data 1 is 3 ms, a data amount of the to-be-transmitted data 2 is 1000 bytes and a remaining time of the to-be-transmitted data 2 is 7 ms, and a data amount of the to-be-transmitted data 3 is 2000 bytes and a remaining time of the to-be-transmitted data 3 is 9 ms. In this case, the first field may be "01", indicating that the first logical resource includes data whose remaining time falls within the range of 0 ms to 10 ms, and does not include data whose remaining time falls within the range of 10 ms to 20 ms. Because there is one bit having the value of "1" in the first field, it may be determined that there is also one BS value field, and a value of the BS value field is "01011110(94)", indicating that a first BS interval to which an amount of to-be-transmitted data whose remaining time falls within the range of 0 ms to 10 ms in the first logical resource belongs is (3469, 3694].

For example, it is assumed that the first field includes 2 bits, and it is agreed in advance in a predefined or preconfigured manner that a low-order bit represents a remaining time interval of 0 ms to 10 ms, and a high-order bit represents a remaining time interval of 10 ms to 20 ms; and the first logical resource includes three pieces of to-be-transmitted data (to-be-transmitted data 1, to-be-transmitted data 2, and to-be-transmitted data 3), where a data amount of the to-be-transmitted data 1 is 150 bytes and a remaining time of the to-be-transmitted data 1 is 3 ms, a data amount of the to-be-transmitted data 2 is 300 bytes and a remaining time of the to-be-transmitted data 2 is 8 ms, and a data amount of the to-be-transmitted data 3 is 100 bytes and a remaining time of the to-be-transmitted data 3 is 18 ms. In this case, the first field may be "11", indicating that the first logical resource includes both data whose remaining time falls within the range of 0 ms to 10 ms, and data whose remaining time falls within the range of 10 ms to 20 ms. Because there are two bits having the value of "1" in the first field, it may be determined that there are also two BS value fields, a value of one BS value field in the two BS value fields is "00111101(61)", indicating that a first BS interval to which an amount of to-be-transmitted data whose remaining time falls within the range of 0 ms to 10 ms in the first logical resource belongs is (436, 464], and a value of the other BS value field is "00100101(37)", indicating that a first BS interval to which an amount of to-be-transmitted data whose remaining time falls within the range of 10 ms to 20 ms in the first logical resource belongs is (96,103].

To help better understand the implementation 1, several specific value examples are provided herein by using a part of the foregoing possible forms as an example to describe meanings expressed by the MAC CE.

Example 1: The first field has a length of 4 bits, and explicitly indicates a smallest remaining time of data in the LCG x. The second field has a length of 1 bit, and indicates a BS table used as a reference for a BS value field. Only one BS value field exists, and indicates a total amount of to-be-transmitted data in the LCG x. The first field has a value of "1010", the second field has a value of "1", and a BS value has a value of "01000000(64)".
(a) Assuming that both the new BS table and the remaining time reporting function are configured for the LCG x, the first field indicates that the smallest remaining time of the data in the LCG x is 10 ms, the second field indicates that the new BS table is used as a reference for the BS value, and the BS value indicates an index of 64. In this case, it is found in the newly defined BS table that a data amount corresponding to the index of 64 is the total amount of the to-be-transmitted data in the LCG x.
(b) Assuming that the new BS table is configured for the LCG x, but the remaining time reporting function is not configured for the LCG x, the first field is meaningless. It is found in the newly defined BS table based on the second field and the BS value that a data amount corresponding to an index number of 64 is the total amount of the to-be-transmitted data in the LCG x.
(c) Assuming that the new BS table is not configured for the LCG x, but the remaining time reporting function is configured for the LCG x, the first field indicates that the smallest remaining time of the data in the LCG x is 10 ms, the second field is meaningless, and the old BS table is still used as a reference for the BS value by default. It is found in the old BS table that a data amount corresponding to an index number of 64 is the total amount of the to-be-transmitted data in the LCG x.
(d) Assuming that neither the new BS table nor the remaining time reporting function is configured for the LCG x, it is found in the old BS table that a data amount corresponding to an index number of 64 is the total amount of the to-be-transmitted data in the LCG x.

Example 2: The first field has a length of 2 bits, where a low-order bit represents a remaining time interval of 0 ms to 10 ms, and a high-order bit represents 10 ms to 20 ms. The second field has a length of 2 bits, which respectively correspond to the two time intervals of the first field. A quantity of BS value fields is related to the first field. When the first field is meaningless, there is only one BS value field. When the first field is meaningful, the quantity of BS value fields is equal to a quantity of bits having a value of "1" in the first field. The first field has a value of "01", the second field has a value of "11", and a BS value has a value of "01000000(64)".
(a) Assuming that both the new BS table and the remaining time reporting function are configured for the LCG x, the first field indicates that the LCG x includes data whose remaining time falls within 0 ms to 10 ms, and does not include data whose remaining time falls within 10 ms to 20 ms; a low-order bit of the second field indicates that the new BS table is used as a reference for a BS value corresponding to the data whose remaining time falls within 0 ms to 10 ms, and a high-order bit of the second field is meaningless; and the BS value indicates an index of 64. In this case, it is found in the newly defined BS table that a data amount corresponding to the index of 64 is an amount of the to-be-transmitted data whose remaining time falls within 0 ms to 10 ms in the LCG x.
(b) Assuming that the new BS table is configured for the LCG x, but the remaining time reporting function is not configured for the LCG x, the first field is meaningless. It is found in the newly defined BS table based on the second field and the BS value that a data amount corresponding to an index number of 64 is a total amount of to-be-transmitted data in the LCG x.
(c) Assuming that the new BS table is not configured for the LCG x, but the remaining time reporting function is configured for the LCG x, the first field indicates that the LCG x includes data whose remaining time falls within 0 ms to 10 ms, and does not include data whose remaining time falls within 10 ms to 20 ms; and the second field is meaningless, and the old BS table is still used as a reference for the BS value by default. It is found in the old BS table that a data amount corresponding to an index number of 64 is an amount of the to-be-transmitted data whose remaining time falls within 0 ms to 10 ms in the LCG x.
(d) Assuming that neither the new BS table nor the remaining time reporting function is configured for the LCG x, it is found in the old BS table that a data amount corresponding to an index number of 64 is a total amount of to-be-transmitted data in the LCG x.

In addition, to help better understand the implementation 2, several specific value examples are provided herein by using a part of the foregoing possible forms as an example to describe meanings expressed by the MAC CE.

Example 1: The third field has a value of "1", and the fourth field has a value of "0". In this case, the MAC CE includes the first field but does not include the second field. It is assumed that the first field has a length of 2 bits, where a low-order bit represents a remaining time interval of 0 ms to 10 ms, and a high-order bit represents 10 ms to 20 ms; and a quantity of BS value fields is equal to a quantity of bits having a value of "1" in the first field. If the first field has a value of "01", and a BS value has a value of "01000000(64)", it indicates that the LCH x includes to-be-transmitted data whose remaining time falls within 0 ms to 10 ms, and does not include data whose remaining time falls within 10 ms to 20 ms. The old BS table is still used as a reference for the BS value by default. It is found in the old BS table that a data amount corresponding to an index number of 64 is an amount of the to-be-transmitted data whose remaining time falls within 0 ms to 10 ms in the LCH x.

Example 2: The third field has a value of "0", and the fourth field has a value of "1". In this case, the MAC CE includes the second field but does not include the first field. It is assumed that the second field has a length of 1 bit, and there is only one BS value field. If the first field has a value of "1", and the BS value has a value of "01000000(64)", it indicates that it is found in the new BS table that a data amount corresponding to an index number of 64 is a total amount of to-be-transmitted data in the LCH x.

Example 3: The third field has a value of "1", and the fourth field has a value of "1". In this case, the MAC CE includes both the first field and the second field. It is assumed that the first field has a length of 2 bits, where a low-order bit represents a remaining time interval of 0 ms to 10 ms, and a high-order bit represents 10 ms to 20 ms; the second field has a length of 2 bits, which respectively correspond to the two remaining time intervals of the first field; and a quantity of BS value fields is equal to a quantity of bits having a value of "1" in the first field. The first field has a value of "01", the second field has a value of "11", and a BS value has a value of "01000000(64)". In this case, the first field indicates that the LCH x includes to-be-transmitted data whose remaining time falls within 0 ms to 10 ms, and does not include data whose remaining time falls within 10 ms to 20 ms. A low-order bit of the second field indicates that the new table is used as a reference for a BS value corresponding to the interval of 0 ms to 10 ms, and a high-order bit of the second field is meaningless. It is found in the new BS table that a data amount corresponding to an index number of 64 is an amount of the to-be-transmitted data whose remaining time falls within 0 ms to 10 ms in the LCH x.

S402: The terminal device sends the uplink signal to the access network device. Correspondingly, the access network device receives the uplink signal from the terminal device.

In some feasible implementations, after the access network device receives the uplink signal from the terminal device, the access network device may determine, based on the information that is about the at least one logical resource and that is carried in the received uplink signal, one or more of the following information: remaining time information of to-be-transmitted data in each logical resource of the at least one logical resource, a first BS table enabled for each logical resource, a first BS interval to which a data amount of to-be-transmitted data in each logical resource belongs, and the like. Therefore, the access network device may perform data scheduling in a timely manner based on the obtained information, thereby avoiding timeout.

It should be noted that the possible forms of the various fields enumerated above are merely used to explain the functions and meanings of the fields, and do not constitute a limitation on this application. In addition, the various possible forms of the various fields may be combined to form a plurality of different MAC CE formats. This is not limited in this application. The lengths and the combination order of the various fields shown in FIG. 5 to FIG. 13 are merely used as examples, and do not limit this application.

In this embodiment of this application, a new MAC CE format is designed, so that both separate use and simultaneous use of two functions of the remaining time and the new BS table are supported. This can avoid repetition or a conflict of reported information and also ensure network flexibility and configurability.

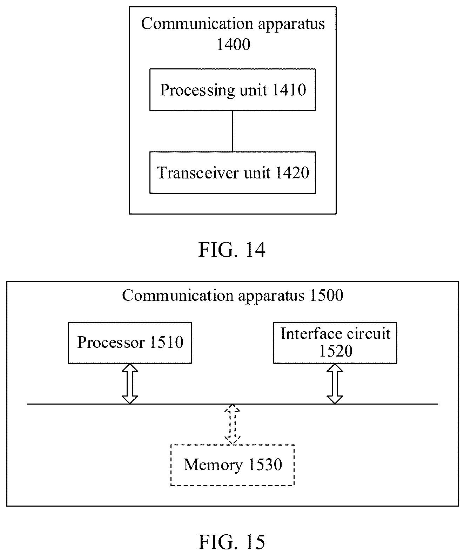

The following describes in detail communication apparatuses provided in this application with reference to FIG. 14 and FIG. 15.

It may be understood that, to implement functions in the foregoing embodiments, the communication apparatus includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 14 and FIG. 15 are diagrams of structures of possible communication apparatuses according to embodiments of this application. The communication apparatuses may be configured to implement functions of the terminal device or the access network device in the foregoing method embodiments. Therefore, beneficial effects of the foregoing method embodiments can also be achieved. In embodiments of this application, the communication apparatus may be one of the terminal devices 120a to 120j shown in FIG. 1, may be the access network device 110a or 110b shown in FIG. 1, or may be a module (for example, a chip) used in the terminal device or the access network device.

As shown in FIG. 14, a communication apparatus 1400 includes a processing unit 1410 and a transceiver unit 1420. The communication apparatus 1400 is configured to implement functions of the terminal device or the access network device in the method embodiment shown in FIG. 4.

When the communication apparatus 1400 is configured to implement the functions of the terminal device in the method embodiment shown in FIG. 4,
the processing unit 1410 is configured to determine an uplink signal; and
the transceiver unit 1420 is configured to send the uplink signal to a network device.

The uplink signal includes information about at least one logical resource, the at least one logical resource includes a first logical resource, information about the first logical resource includes a first field and/or a second field, the first field indicates remaining time information of to-be-transmitted data in the first logical resource, the second field indicates a first buffer status BS table enabled for the first logical resource, there are a plurality of preset BS tables configured for the first logical resource, the first BS table is included in the preset BS tables, and the first BS table includes a plurality of BS intervals; when a remaining time reporting function is configured for the first logical resource, the information about the first logical resource includes the first field; and when there are the plurality of preset BS tables, the information about the first logical resource includes the second field.

When the communication apparatus 1400 is configured to implement the functions of the access network device in the method embodiment shown in FIG. 4,
the transceiver unit 1420 is configured to receive an uplink signal from a terminal device.

The uplink signal includes information about at least one logical resource, the at least one logical resource includes a first logical resource, information about the first logical resource includes a first field and/or a second field, the first field indicates remaining time information of to-be-transmitted data in the first logical resource, the second field indicates a first buffer status BS table enabled for the first logical resource, there are a plurality of preset BS tables configured for the first logical resource, the first BS table is included in the preset BS tables, and the first BS table includes a plurality of BS intervals; when a remaining time reporting function is configured for the first logical resource, the information about the first logical resource includes the first field; and when there are the plurality of preset BS tables, the information about the first logical resource includes the second field.

For more detailed descriptions of the processing unit 1410 and the transceiver unit 1420, refer to related descriptions in the method embodiment shown in FIG. 4.

As shown in FIG. 15, a communication apparatus 1500 includes a processor 1510 and an interface circuit 1520. The processor 1510 and the interface circuit 1520 are coupled to each other. It may be understood that the interface circuit 1520 may be a transceiver or an input/output interface. Optionally, the communication apparatus 1500 may further include a memory 1530, configured to store instructions executed by the processor 1510, store input data that the processor 1510 needs to run instructions, or store data generated after the processor 1510 runs instructions.

When the communication apparatus 1500 is configured to implement the method shown in FIG. 4, the processor 1510 is configured to implement a function of the processing unit 1410, and the interface circuit 1520 is configured to implement a function of the transceiver unit 1420.

When the communication apparatus is a chip used in a terminal device, the chip in the terminal device implements the functions of the terminal device in the foregoing method embodiments. The chip in the terminal device receives information from another module (for example, a radio frequency module or an antenna) in the terminal device, where the information is sent by the access network device to the terminal device. Alternatively, the chip in the terminal device sends information to another module (for example, a radio frequency module or an antenna) in the terminal device, where the information is sent by the terminal device to the access network device.

When the communication apparatus is a module used in an access network device, the module in the access network device implements the functions of the access network device in the foregoing method embodiments. The module in the access network device receives information from another module (for example, a radio frequency module or an antenna) in the access network device, where the information is sent by a terminal device to the access network device. Alternatively, the module in the access network device sends information to another module (for example, a radio frequency module or an antenna) in the access network device, where the information is sent by the access network device to a terminal device. The module in the network device may be a baseband chip of the access network device, may be a CU, a DU, or another module, or may be an apparatus in an open radio access network (open radio access network, O-RAN) architecture, for example, an apparatus like an open CU or an open DU.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in an access network device or a terminal device. The processor and the storage medium may alternatively exist as discrete components in the access network device or the terminal device.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
determining an uplink signal; and
sending the uplink signal to an access network device, wherein
the uplink signal comprises information about at least one logical resource, the at least one logical resource comprises a first logical resource, information about the first logical resource comprises a first field and/or a second field, the first field indicates remaining time information of to-be-transmitted data in the first logical resource, the second field indicates a first buffer status BS table enabled for the first logical resource, there are a plurality of preset BS tables configured for the first logical resource, the first BS table is comprised in the preset BS tables, and the first BS table comprises a plurality of BS intervals;
when a remaining time reporting function is configured for the first logical resource, the information about the first logical resource comprises the first field; and
when there are the plurality of preset BS tables, the information about the first logical resource comprises the second field.

2. The method according to claim 1, wherein
when the remaining time reporting function is not configured for the first logical resource, the first field is a reserved field.

3. The method according to claim 1 or 2, wherein
when there is one preset BS table, the second field is a reserved field.

4. The method according to claim 1, wherein the information about the first logical resource further comprises a third field and/or a fourth field, the third field indicates whether the first field exists, and the fourth field indicates whether the second field exists; and
when the third field indicates that the first field exists, the information about the first logical resource comprises the first field; or
when the third field indicates that the first field does not exist, the information about the first logical resource does not comprise the first field; or
when the fourth field indicates that the second field exists, the information about the first logical resource comprises the second field; or
when the fourth field indicates that the second field does not exist, the information about the first logical resource does not comprise the second field.

5. The method according to claim 4, wherein
when the remaining time reporting function is configured for the first logical resource, the third field indicates that the first field exists; or
when the remaining time reporting function is not configured for the first logical resource, the third field indicates that the first field does not exist; or
when there are the plurality of preset BS tables, the fourth field indicates that the second field exists; or
when there is one preset BS table, the fourth field indicates that the second field does not exist.

6. The method according to claim 1, wherein the information about the first logical resource further comprises a third field, and the third field indicates whether the first field exists; and
when the third field indicates that the first field does not exist, the information about the first logical resource does not comprise the first field, and the information about the first logical resource comprises the second field.

7. The method according to claim 1, wherein
when the remaining time reporting function is configured for the first logical resource, and there is one preset BS table, the information about the first logical resource comprises the first field and does not comprise the second field; or
when the remaining time reporting function is not configured for the first logical resource, and there are the plurality of preset BS tables, the information about the first logical resource comprises the second field and does not comprise the first field; or
when the remaining time reporting function is configured for the first logical resource, and there are the plurality of preset BS tables, the information about the first logical resource comprises the first field and the second field.

8. The method according to any one of claims 1 to 7, wherein the information about the first logical resource further comprises a fifth field, the fifth field indicates a first BS interval to which a data amount of to-be-transmitted data in the first logical resource belongs, and the first BS interval is comprised in the first BS table.

9. The method according to claim 8, wherein the first logical resource comprises at least one piece of to-be-transmitted data, and one piece of to-be-transmitted data corresponds to one remaining time; and
that the fifth field indicates the first BS interval to which the data amount of the to-be-transmitted data in the first logical resource belongs comprises:
there is one fifth field, and the fifth field indicates a first BS interval to which a total data amount of all to-be-transmitted data in the first logical resource belongs; or
there is one fifth field, and the fifth field indicates a first BS interval to which a data amount of to-be-transmitted data within a smallest remaining time in a remaining time corresponding to the at least one piece of to-be-transmitted data belongs; or
there are two fifth fields, one fifth field indicates a first BS interval to which the total data amount belongs, and the other fifth field indicates a first BS interval to which a data amount of to-be-transmitted data within the smallest remaining time belongs; or
a quantity of fifth fields is equal to a quantity of remaining time intervals indicated by the first field, one fifth field corresponds to one remaining time interval in the remaining time interval indicated by the first field, and one fifth field indicates a first BS interval to which a data amount of to-be-transmitted data whose remaining time falls within the remaining time interval in the first logical resource belongs.

10. The method according to any one of claims 1 to 9, wherein the first logical resource comprises at least one piece of to-be-transmitted data, and one piece of to-be-transmitted data corresponds to one remaining time; and
that the first field indicates the remaining time information of the to-be-transmitted data in the first logical resource comprises:
the first field indicates a smallest remaining time in a remaining time corresponding to the at least one piece of to-be-transmitted data; or
the first field indicates a remaining time interval to which a smallest remaining time in a remaining time corresponding to the at least one piece of to-be-transmitted data belongs; or
the first field indicates a remaining time interval to which a remaining time corresponding to the at least one piece of to-be-transmitted data respectively belongs.

11. The method according to any one of claims 1 to 10, wherein that the second field indicates the first BS table enabled for the first logical resource comprises:
the second field indicates one first BS table, the first BS table is one of the plurality of preset BS tables, and the first BS table is used as a reference for first BS intervals indicated by all fifth fields in the information about the first logical resource; or
when there are a plurality of fifth fields, the second field indicates a plurality of first BS tables, any one of the plurality of first BS tables is one of the plurality of preset BS tables, a quantity of the plurality of first BS tables is equal to the quantity of fifth fields, the plurality of first BS tables are in one-to-one correspondence with the plurality of fifth fields, and one corresponding first BS table is used as a reference for a first BS interval indicated by one fifth field.

12. The method according to any one of claims 1 to 11, wherein
an appearance order of the information about the at least one logical resource in the uplink signal is determined based on an identifier of the at least one logical resource; and/or
an appearance order of the information about the at least one logical resource in the uplink signal is determined based on a priority of the at least one logical resource; and/or
an appearance order of the information about the at least one logical resource in the uplink signal is determined based on a remaining time of to-be-transmitted data in the at least one logical resource.

13. A communication method, comprising:
receiving an uplink signal from a terminal device, wherein
the uplink signal comprises information about at least one logical resource, the at least one logical resource comprises a first logical resource, information about the first logical resource comprises a first field and/or a second field, the first field indicates remaining time information of to-be-transmitted data in the first logical resource, the second field indicates a first buffer status BS table enabled for the first logical resource, there are a plurality of preset BS tables configured for the first logical resource, the first BS table is comprised in the preset BS tables, and the first BS table comprises a plurality of BS intervals;
when a remaining time reporting function is configured for the first logical resource, the information about the first logical resource comprises the first field; and
when there are the plurality of preset BS tables, the information about the first logical resource comprises the second field.

14. The method according to claim 13, wherein
when the remaining time reporting function is not configured for the first logical resource, the first field is a reserved field.

15. The method according to claim 13 or 14, wherein when there is one preset BS table, the second field is a reserved field.

16. The method according to claim 13, wherein the information about the first logical resource further comprises a third field and/or a fourth field, the third field indicates whether the first field exists, and the fourth field indicates whether the second field exists; and
when the third field indicates that the first field exists, the information about the first logical resource comprises the first field; or
when the third field indicates that the first field does not exist, the information about the first logical resource does not comprise the first field; or
when the fourth field indicates that the second field exists, the information about the first logical resource comprises the second field; or
when the fourth field indicates that the second field does not exist, the information about the first logical resource does not comprise the second field.

17. The method according to claim 16, wherein
when the remaining time reporting function is configured for the first logical resource, the third field indicates that the first field exists; or
when the remaining time reporting function is not configured for the first logical resource, the third field indicates that the first field does not exist; or
when there are the plurality of preset BS tables, the fourth field indicates that the second field exists; or
when there is one preset BS table, the fourth field indicates that the second field does not exist.

18. The method according to claim 13, wherein the information about the first logical resource further comprises a third field, and the third field indicates whether the first field exists; and
when the third field indicates that the first field does not exist, the information about the first logical resource does not comprise the first field, and the information about the first logical resource comprises the second field.

19. The method according to claim 13, wherein
when the remaining time reporting function is configured for the first logical resource, and there is one preset BS table, the information about the first logical resource comprises the first field and does not comprise the second field; or
when the remaining time reporting function is not configured for the first logical resource, and there are the plurality of preset BS tables, the information about the first logical resource comprises the second field and does not comprise the first field; or
when the remaining time reporting function is configured for the first logical resource, and there are the plurality of preset BS tables, the information about the first logical resource comprises the first field and the second field.

20. The method according to any one of claims 13 to 19, wherein the information about the first logical resource further comprises a fifth field, the fifth field indicates a first BS interval to which a data amount of to-be-transmitted data in the first logical resource belongs, and the first BS interval is comprised in the first BS table.

21. The method according to claim 20, wherein the first logical resource comprises at least one piece of to-be-transmitted data, and one piece of to-be-transmitted data corresponds to one remaining time; and
that the fifth field indicates the first BS interval to which the data amount of the to-be-transmitted data in the first logical resource belongs comprises:
there is one fifth field, and the fifth field indicates a first BS interval to which a total data amount of all to-be-transmitted data in the first logical resource belongs; or
there is one fifth field, and the fifth field indicates a first BS interval to which a data amount of to-be-transmitted data within a smallest remaining time in a remaining time corresponding to the at least one piece of to-be-transmitted data belongs; or
there are two fifth fields, one fifth field indicates a first BS interval to which the total data amount belongs, and the other fifth field indicates a first BS interval to which a data amount of to-be-transmitted data within the smallest remaining time belongs; or
a quantity of fifth fields is equal to a quantity of remaining time intervals indicated by the first field, one fifth field corresponds to one remaining time interval in the remaining time interval indicated by the first field, and one fifth field indicates a first BS interval to which a data amount of to-be-transmitted data whose remaining time falls within the remaining time interval in the first logical resource belongs.

22. The method according to any one of claims 13 to 21, wherein the first logical resource comprises at least one piece of to-be-transmitted data, and one piece of to-be-transmitted data corresponds to one remaining time; and
that the first field indicates the remaining time information of the to-be-transmitted data in the first logical resource comprises:
the first field indicates a smallest remaining time in a remaining time corresponding to the at least one piece of to-be-transmitted data; or
the first field indicates a remaining time interval to which a smallest remaining time in a remaining time corresponding to the at least one piece of to-be-transmitted data belongs; or
the first field indicates a remaining time interval to which a remaining time corresponding to the at least one piece of to-be-transmitted data respectively belongs.

23. The method according to any one of claims 13 to 22, wherein that the second field indicates the first BS table enabled for the first logical resource comprises:
the second field indicates one first BS table, the first BS table is one of the plurality of preset BS tables, and the first BS table is used as a reference for first BS intervals indicated by all fifth fields in the information about the first logical resource; or
when there are a plurality of fifth fields, the second field indicates a plurality of first BS tables, any one of the plurality of first BS tables is one of the plurality of preset BS tables, a quantity of the plurality of first BS tables is equal to the quantity of fifth fields, the plurality of first BS tables are in one-to-one correspondence with the plurality of fifth fields, and one corresponding first BS table is used as a reference for a first BS interval indicated by one fifth field.

24. The method according to any one of claims 13 to 23, wherein
an appearance order of the information about the at least one logical resource in the uplink signal is determined based on an identifier of the at least one logical resource; and/or
an appearance order of the information about the at least one logical resource in the uplink signal is determined based on a priority of the at least one logical resource; and/or
an appearance order of the information about the at least one logical resource in the uplink signal is determined based on a remaining time of to-be-transmitted data in the at least one logical resource.

25. A communication apparatus, comprising:
a processing unit, configured to determine an uplink signal; and
a transceiver unit, configured to send the uplink signal to an access network device, wherein
the uplink signal comprises information about at least one logical resource, the at least one logical resource comprises a first logical resource, information about the first logical resource comprises a first field and/or a second field, the first field indicates remaining time information of to-be-transmitted data in the first logical resource, the second field indicates a first buffer status BS table enabled for the first logical resource, there are a plurality of preset BS tables configured for the first logical resource, the first BS table is comprised in the preset BS tables, and the first BS table comprises a plurality of BS intervals;
when a remaining time reporting function is configured for the first logical resource, the information about the first logical resource comprises the first field; and
when there are the plurality of preset BS tables, the information about the first logical resource comprises the second field.

26. A communication apparatus, comprising:
a transceiver unit, configured to receive an uplink signal from a terminal device, wherein
the uplink signal comprises information about at least one logical resource, the at least one logical resource comprises a first logical resource, information about the first logical resource comprises a first field and/or a second field, the first field indicates remaining time information of to-be-transmitted data in the first logical resource, the second field indicates a first buffer status BS table enabled for the first logical resource, there are a plurality of preset BS tables configured for the first logical resource, the first BS table is comprised in the preset BS tables, and the first BS table comprises a plurality of BS intervals;
when a remaining time reporting function is configured for the first logical resource, the information about the first logical resource comprises the first field; and
when there are the plurality of preset BS tables, the information about the first logical resource comprises the second field.

27. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 1 to 12 or the method according to any one of claims 13 to 24 through a logic circuit or by executing code instructions.

28. A computer-readable storage medium, wherein the storage medium stores a computer program or instructions; and when the computer program or instructions are executed by a communication apparatus, the method according to any one of claims 1 to 12 or the method according to any one of claims 13 to 24 is implemented.

29. A computer program product, comprising computer program code, wherein when the computer program code is run on a computer, the method according to any one of claims 1 to 12 or the method according to any one of claims 13 to 24 is implemented.

30. A communication system, comprising a communication apparatus configured to implement the method according to any one of claims 1 to 12, and a communication apparatus configured to implement the method according to any one of claims 13 to 24.
